# EUROPEAN PATENT SPECIFICATION

(11) **EP 2 122 711 B1**
(45) Date of publication and mention of the grant of the patent: **28.11.2012**
(21) Application number: 08725512.1
(22) Date of filing: 12.02.2008
(51) Int. Cl.: H01M 2/08, H01M 10/04, H01M 6/42

(54) **STACKED CONSTRUCTIONS FOR ELECTROCHEMICAL BATTERIES**
STAPELKONSTRUKTIONEN FÜR BATTERIEZELLEN
CONSTRUCTIONS EMPILÉES POUR BATTERIES ÉLECTROCHIMIQUES

(30) Priority: 12.02.2007 US 901046 P
(43) Date of publication of application: 25.11.2009
(60) Divisional application: 12160301.3
(73) Proprietor: Ogg, Randy, Newberry, FL 32669 (US); Higgins, Martin Patrick, Old Field, NY 11733 (US)
(72) Inventor: Ogg, Randy, Newberry, FL 32669 (US); Higgins, Martin Patrick, Old Field, NY 11733 (US)
(74) Representative: Vossius & Partner
(86) International application number: PCT/US2008/001888
(87) International publication number: WO 2008/100533

(56) References cited:
- EP-A- 1 841 001
- WO-A-2006/119289
- US-A- 5 393 617
- US-A1- 2004 161 667
- US-A1- 2006 292 443

## Description

### Field of the Invention

This invention can relate generally to batteries and, more particularly, to apparatus and methods for improving the stacked constructions of electrochemical batteries.

### Background of the Invention

conventional batteries have been manufactured as either a wound cell battery that has only two electrodes or a standard prismatic cell battery that has many plate sets in parallel. In both of these types, the electrolyte can be shared everywhere within the battery. The wound cell and prismatic cell structures suffer from high electrical resistances due to their electrical paths having to cross multiple connections and span significantly long distances to cover the complete circuit from one cell to the next in a series arrangement.

Recently, various types of batteries with sealed cells in a stacked formation have been developed that are able to provide higher discharge rates and higher voltage potentials between external connectors than that of standard wound or prismatic batteries, and are therefore in high demand for certain applications. Certain types of these batteries with sealed cells in a stacked formation have been developed to generally include a stack of independently sealed pairs of mono-polar electrode units (MPUs). Each of these MPUs may be provided with either a positive active material electrode layer or a negative active material electrode layer coated on a first side of a current collector (see, for example, Klein, U.S. Patent No. 5,393,617, issued February 28, 1995. An MPU with a positive active material electrode layer (i.e., a positive MPU) and an MPU with a negative active material electrode layer (i.e., a negative MPU) may have an electrolyte layer therebetween for electrically isolating the current collectors of those two MPUs. The current collectors of this pair of positive and negative MPUs, along with the active material electrode layers and electrolyte therebetween, may be sealed as a single cell or cell segment. A battery that includes a stack of such cells, each having a positive MPU and a negative MPU, shall be referred to herein as a "stacked mono-polar" battery.

The side of the current collector of the positive MPU not coated with an electrode layer in a first cell may be electrically coupled to the side of the current collector of the negative MPU not coated with an electrode layer in a second cell, such that the first and second cells are in a stacked formation. The series configuration of these cell segments in a stack can cause the voltage potential to be different between current collectors. However, if the current collectors of a particular cell contacted each other or if the common electrolyte of the two MPUs in a particular cell is shared with any additional MPU in the stack, the voltage and energy of the battery would fade (i.e., discharge) quickly to zero. Therefore, it is desirable for a stacked mono-polar battery to independently seal the electrolyte of each of its cells from each of its other cells. Accordingly, it would be advantageous to be able to provide a stacked mono-polar battery with improved sealing of electrolyte between adjacent cells.

Other types of these batteries with sealed cells in a stacked formation have been developed to generally include a series of stacked bi-polar electrode units (BPUs). Each of these BPUs may be provided with a positive active material electrode layer and a negative active material electrode layer coated on opposite sides of a current collector (see, for example, Fukuzawa et al., U.S. Patent Publication No. 2004/0161667 A1, published August 19, 2004). Any two BPUs may be stacked on top of one another with an electrolyte layer provided between the positive active material electrode layer of one of the BPUs and the negative active material electrode layer of the other one of the BPUs for electrically isolating the current collectors of those two BPUs. The current collectors of any two adjacent BPUs, along with the active material electrode layers and electrolyte therebetween, may also be a sealed single cell or cell segment. A battery that includes a stack of such cells, each having a portion of a first BPU and a portion of a second BPU, shall be referred to herein as a "stacked bi-polar" battery.

While the positive side of a first BPU and the negative side of a second BPU may form a first cell, the positive side of the second BPU may likewise form a second cell with the negative side of a third BPU or the negative side of a negative MPU, for example. Therefore, an individual BPU may be included in two different cells of a stacked bi-polar battery. The series configuration of these cells in a stack can cause the voltage potential to be different between current collectors. However, if the current collectors of a particular cell contacted each other or if the common electrolyte of the two BPUs in a first cell is shared with any other cell in the stack, the voltage and energy of the battery would fade (i.e., discharge) quickly to zero. Therefore, it is desirable for a stacked bi-polar battery to independently seal the electrolyte of each of its cells from each of its other cells. Accordingly, it would also be advantageous to be able to provide a stacked bi-polar battery with improved sealing of electrolyte between adjacent cells.

WO2006119289 discloses a battery comprising a stack of a plurality of electrode units in a stacking direction, the stack comprising a first electrode unit, a second electrode unit stacked on top of the first electrode unit in the stacking direction and a first electrolyte layer provided between the first electrode unit and the second electrode unit, the battery further comprising a first gasket having an inner surface and an outer surface, wherein the first gasket is positioned about the first electrode layer, wherein the first electrolyte layer is sealed by the inner surface of the first gasket and the first and second electrode units. The first gasket is compressible.

It may be desirable to increase the amount of electrolyte that may be deposited within a cell segment of the battery during its manufacture such that, once the electrolyte is charged and the battery is formed, each cell segment may be substantially filled with electrolyte. WO2006119289 fails to do so.

### Summary of the Invention

It is therefore an object of this invention to provide stacked batteries with improved sealing of electrolyte between adjacent cells and with the possibility of increasing the amount of electrolyte that may be deposited within a cell segment of the battery during its manufacture.

In accordance with a first embodiment of the invention, there is provided a battery comprising a stack of a plurality of electrode units in a stacking direction, the stack comprising a first electrode unit, a second electrode unit stacked on top of the first electrode unit in the stacking direction and a first electrolyte layer provided between the first electrode unit and the second electrode unit, the battery further comprising a first gasket positioned about the first electrolyte layer, wherein the first electrolyte layer is sealed by the first gasket and the first and second electrode units, wherein the first gasket includes a first gasket member and a second gasket member and wherein the first gasket member is substantially incompressible and the second gasket member is compressible.

In accordance with a second embodiment of the invention, there is provided a battery comprising a stack of a plurality of electrode units in a stacking direction, the stack comprising a first electrode unit, a second electrode unit stacked on top of the first electrode unit in the stacking direction and a first electrolyte layer provided between the first electrode unit and the second electrode unit, the battery further comprising a compressible gasket positioned about the first electrolyte layer and a substantially incompressible gasket positioned about the compressible gasket.

There is provided a battery that includes a stack of a plurality of electrode units in a stacking direction. The stack includes a first electrode unit, a second electrode unit stacked on top of the first electrode unit in the stacking direction, and a first electrolyte layer provided between the first electrode unit and the second electrode unit. The battery further includes a first gasket having an inner surface and an outer surface, wherein the first gasket is positioned about the first electrolyte layer, wherein the first electrolyte layer is sealed by the inner surface of the first gasket and the first and second electrode units, and wherein at least a first portion of the first electrode unit extends along a portion of the outer surface of the first gasket.

A battery includes a stack of a plurality of electrode units in a stacking direction. The stack includes a first electrode unit, a second electrode unit stacked on top of the first electrode unit in the stacking direction, and a first electrolyte layer provided between the first electrode unit and the second electrode unit. The first electrode unit includes a first electrode substrate, and a first active layer on a first side of the first electrode substrate. The first active layer includes at least a first active portion on a first portion of the first side and a second active portion on a second portion of the first side, wherein the first active portion of the first active layer extends to a first height above the first side of the first electrode substrate, wherein the second active portion of the first active layer extends to a second height above the first side of the first electrode substrate, and wherein the first height is different than the second height.

A battery includes a stack of a plurality of electrode units in a stacking direction. The stack includes a first electrode unit, a second electrode unit stacked on top of the first electrode unit in the stacking direction, a first electrolyte layer provided between the first electrode unit and the second electrode unit, a third electrode unit stacked on top of the second electrode unit in the stacking direction, and a second electrolyte layer provided between the second electrode unit and the third electrode unit. The first electrode unit is separated from the second electrode unit by a first distance in the stacking direction, wherein the second electrode unit is separated from the third electrode unit by a second distance in the stacking direction, and wherein the first distance is different than the second distance.

A battery includes a stack of a plurality of electrode units in a stacking direction. The stack includes a first electrode unit, a second electrode unit stacked on top of the first electrode unit in the stacking direction, and a first electrolyte layer provided between the first electrode unit and the second electrode unit. The battery also includes a first gasket positioned about the first electrolyte layer. The first electrolyte layer is sealed by the first gasket and the first and second electrode units. The first gasket includes a first gasket member and a second gasket member, and the second gasket member is compressible.

A battery includes a stack of a plurality of electrode units in a stacking direction. The stack includes a first electrode unit, a second electrode unit stacked on top of the first electrode unit in the stacking direction, and a first electrolyte layer provided between the first electrode unit and the second electrode unit. The battery also includes a first gasket positioned about the first electrode unit, and a second gasket positioned about the second electrode unit. The first gasket portion is coupled to the second gasket portion about the electrolyte layer, and the first electrolyte layer is sealed by the first gasket, the second gasket, the first electrode unit, and the second electrode unit.

A battery includes a stack of a plurality of electrode units in a stacking direction. The stack includes a first electrode unit, a second electrode unit stacked on top of the first electrode unit in the stacking direction, and a first electrolyte layer provided between the first electrode unit and the second electrode unit. The battery also includes a first gasket positioned about the first electrolyte layer. The first gasket is at least one of thermally fused and ultrasonically welded to the first electrode unit.

A battery includes a stack of a plurality of electrode units in a stacking direction. The stack includes a first electrode unit, a second electrode unit stacked on top of the first electrode unit in the stacking direction, and a first electrolyte layer provided between the first electrode unit and the second electrode unit. The battery also includes a first gasket positioned about the first electrolyte layer. The first electrolyte layer is sealed by the first gasket and the first and second electrode units. The first electrode unit is a mono-polar electrode unit, and the second electrode unit is a mono-polar electrode unit.

### Brief Description of the Drawings

The above and other advantages of the invention will be more apparent upon consideration of the following detailed description, taken in conjunction with the accompanying drawings, in which like reference characters refer to like parts throughout, and in which:

FIG. 1 is a schematic cross-sectional view of a basic structure of a bi-polar electrode unit (BPU);

FIG. 2 is a schematic cross-sectional view of a basic structure of a stack of BPUs of FIG. 1;

FIG. 3 is a schematic cross-sectional view of a basic structure of a stacked bi-polar battery implementing the stack of BPUs of FIG. 2;

FIG. 3A is a schematic circuit diagram of the basic constitution of the bi-polar battery of FIG. 3;

FIG. 4 is a schematic top view of the bi-polar battery of FIG. 3, taken from line IV-IV of FIG. 3;

FIG. 4A is a schematic top view of the bi-polar battery of FIGS. 3 and 4, taken from line IVA-IVA of FIG. 3;

FIG. 4B is a schematic cross-sectional view of the bi-polar battery of FIGS. 3-4A, taken from line IVB-IVB of FIG. 4A;

FIG. 5 is a detailed schematic cross-sectional view of a particular portion of the bi-polar battery of FIGS. 3-4B;

FIG. 5A is a schematic bottom view of the bi-polar battery of FIGS. 3-5; taken from line VA-VA of FIG. 5;

FIG. 5B is a schematic top view of the bi-polar battery of FIGS. 3-5A, taken from line VB-VB of FIG. 5 ;

FIG. 5C is a schematic top view of the bi-polar battery of FIGS. 3-5B, taken from line VC-VC of FIG. 5;

FIG. 6 is a detailed schematic cross-sectional view of a particular portion of the bi-polar battery of FIGS. 3-5C;

FIG. 7 is a schematic top view of the bipolar battery of FIGS. 3-6, taken from line VII-VII of FIG. 6;

FIG. 8 is a schematic top view of the bi-polar battery of FIGS. 3-7, taken from line VIII-VIII of FIG. 6;

FIG. 9 is a schematic top view of the bi-polar battery of FIGS. 3-8, taken from line IX-IX of FIG. 6;

FIG. 10 is a schematic cross-sectional view of certain elements in a first stage of a method for forming a stacked bi-polar battery;

FIG. 11 is a schematic top view of the battery of FIG. 10, taken from line XI-XI of FIG. 10;

FIG. 12 is a schematic cross-sectional view of certain elements in a second stage of a method for forming the stacked bi-polar battery of FIGS. 10 and 11 ;

FIG. 13 is a schematic top view of the battery of FIGS. 10-12, taken from line XIII-XIII of FIG. 12;

FIG. 14 is a schematic cross-sectional view of certain elements in a third stage of a method for forming the stacked bi-polar battery of FIGS. 10-13;

FIG. 15 is a schematic top view of the battery of FIGS. 10-14, taken from line XV-XV of FIG. 14;

FIG. 16 is a schematic cross-sectional view of certain elements in a fourth stage of a method for forming the stacked bi-polar battery of FIGS. 10-15;

FIG. 17 is a schematic top view of the battery of FIGS. 10-16, taken from line XVII-XVII of FIG. 16;

FIG. 18 is a schematic cross-sectional view of certain elements in a fifth stage of a method for forming the stacked bi-polar battery of FIGS. 10-17;

FIG. 19 is a schematic cross-sectional view of certain elements in a sixth stage of a method for forming the stacked bi-polar battery of FIGS. 10-18;

FIG. 20 is a schematic top view of the battery of FIGS. 10-19, taken from line XX-XX of FIG. 19;

FIG. 21 is a schematic cross-sectional view of certain elements in a sixth stage, similar to FIG. 19, of a method for forming a stacked bi-polar battery;

FIG. 22 is a schematic top view of the battery of FIG. 21, taken from line XXII-XXII of FIG. 21;

FIG. 23 is a schematic cross-sectional view of certain elements in a third stage, similar to FIG. 14, of a method for forming a stacked bi-polar battery according to a first embodiment of the invention;

FIG. 24 is a schematic cross-sectional view of certain elements in a fourth stage, similar to FIG. 16, of a method for forming the stacked bi-polar battery of FIG. 23 according to a first embodiment of the invention;

FIG. 25 is a schematic cross-sectional view of certain elements in a sixth stage, similar to FIG. 19, of a method for forming the stacked bi-polar battery of FIGS. 23 and 24 according to a first embodiment of the invention;

FIG. 26 is a schematic cross-sectional view of certain elements in a fourth stage, similar to FIGS. 16 and 24, of a method for forming a stacked bi-polar battery according to a second embodiment of the invention;

FIG. 27 is a schematic cross-sectional view of certain elements in a sixth stage, similar to FIGS. 19 and 25, of a method for forming the stacked bi-polar battery of FIG. 26 according to a second embodiment of the invention;

FIG. 28 is a schematic cross-sectional view of certain elements in a fourth stage, similar to FIGS. 16, 24, and 26, of a method for forming a stacked bi-polar battery;

FIG. 29 is a schematic top view of a stacked bi-polar battery;

FIG. 30 is a schematic cross-sectional view of the bi-polar battery of FIG. 29, taken from line XXX-XXX of FIG. 29;

FIG. 31 is a schematic top view of a stacked bi-polar battery;

FIG. 32 is a schematic cross-sectional view of the bi-polar battery of FIG. 31, taken from line XXXII-XXXII of FIG. 31;

FIG. 33 is a schematic cross-sectional view of a basic structure of a stacked mono-polar battery;

FIG. 34A is a schematic diagram of a basic structure of single chemistry battery cells linked

FIG. 34B is a schematic diagram of a basic structure of single chemistry battery cells linked

### Detailed Description of the Invention

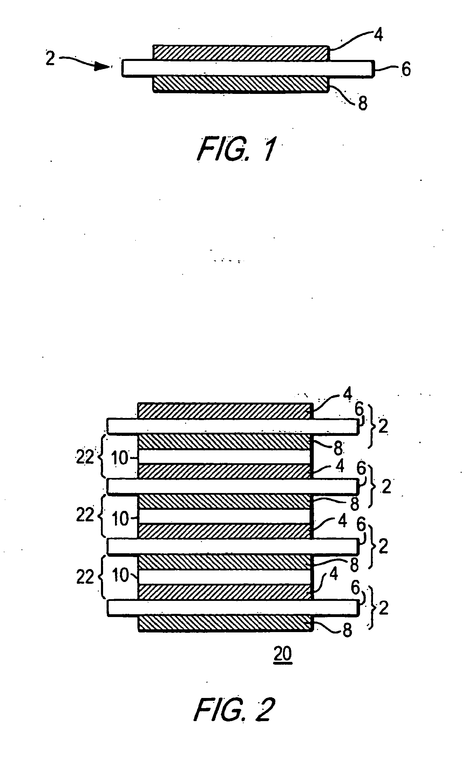

Apparatus and methods are provided for stacked batteries with improved sealing of electrolyte between adjacent cells, and are described below with reference to FIGS. 1-34B.

FIG. 1 shows an illustrative bi-polar unit or BPU 2, BPU 2 can include a positive active material electrode layer 4 that may be provided on a first side of an impermeable conductive substrate or current collector 6, and a negative active material electrode layer 8 that may be provided on the other side of impermeable conductive substrate 6.

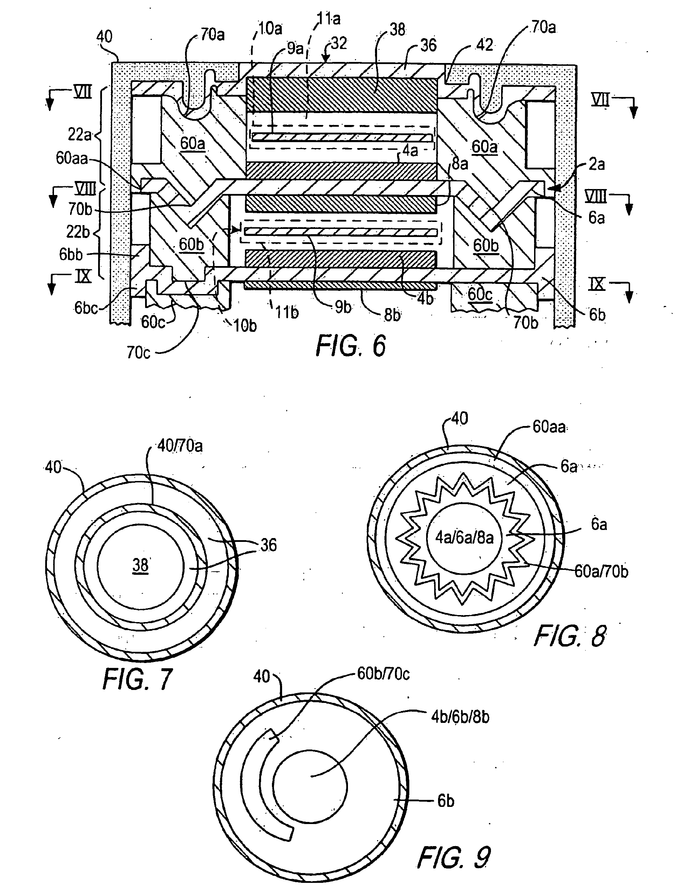

As shown in FIG. 2, for example, multiple BPUs 2 may be stacked substantially vertically into a stack 20, with an electrolyte layer 10 that may be provided between two adjacent BPUs 2, such that positive electrode layer 4 of one BPU 2 may be opposed to negative electrode layer 8 of an adjacent BPU 2 via electrolyte layer 10. Each electrolyte layer 10 can include a separator 9 that may hold an electrolyte 11 (see, e.g., FIG. 6). Separator 9 can electrically separate the positive electrode layer 4 and negative electrode layer 8 adjacent thereto, while allowing ionic transfer between the electrode units, as described in more detail below.

With continued reference to the stacked state of BPUs 2 in FIG. 2, for example, the components included in positive electrode layer 4 and substrate 6 of a first BPU 2, the negative electrode layer 8 and substrate 6 of a second BPU 2 adjacent to the first BPU 2, and the electrolyte layer 10 between the first and second BPUs 2 shall be referred to herein as a single "cell" or "cell segment" 22. Each impermeable substrate 6 of each cell segment 22 can be shared by the applicable adjacent cell segment 22.

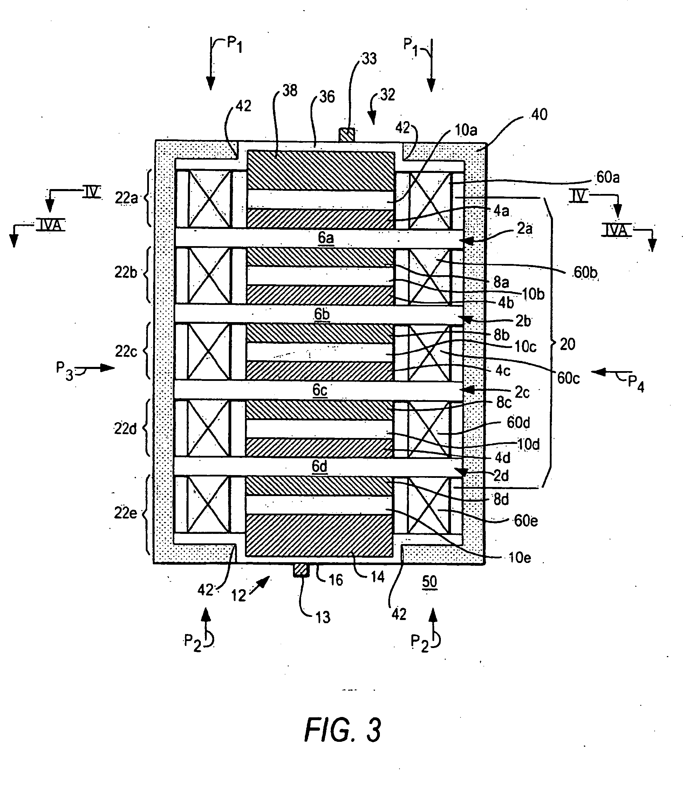

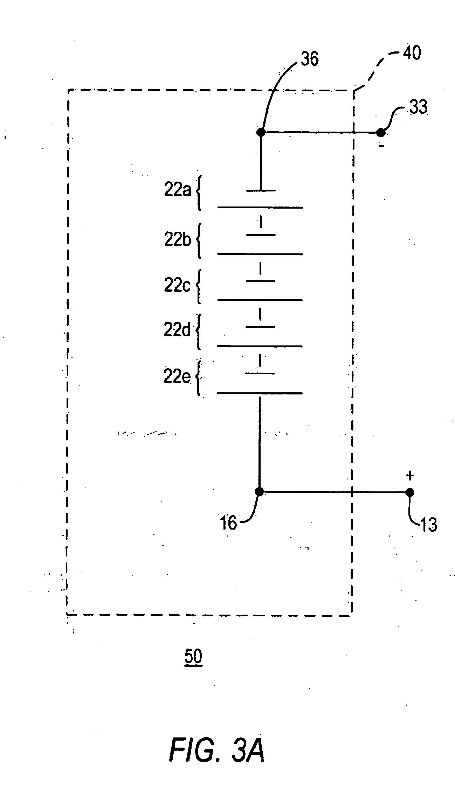

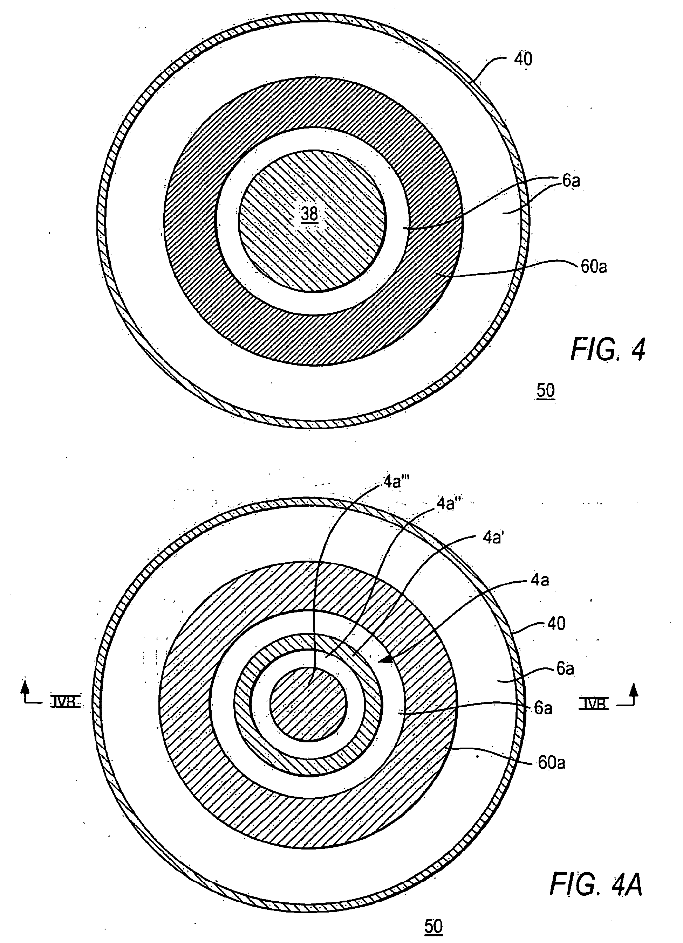

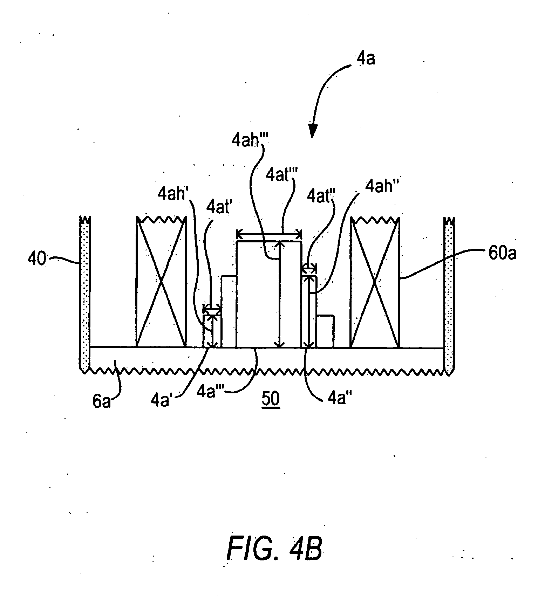

As shown in FIGS. 3 and 4, for example, positive and negative terminals may be provided along with stack 20 of one or more BPUs 2 to constitute a stacked bi-polar battery 50 in accordance with one embodiment of the invention. A positive mono-polar electrode unit or MPU 12, that can include a positive active material electrode layer 14 provided on one side of an impermeable conductive substrate 16, may be positioned at a first end of stack 20 with an electrolyte layer provided therebetween (i.e., electrolyte layer 10e), such that positive electrode layer 14 of positive MPU 12 may be opposed to a negative electrode layer (i.e., layer 8d) of the BPU (i.e., BPU 2d) at that first end of stack 20 via the electrolyte layer 10e. A negative mono-polar electrode unit or MPU 32, that can include a negative active material electrode layer 38 provided on one side of an impermeable conductive substrate 36, may be positioned at the second end of stack 20 with an electrolyte layer provided therebetween (i.e., electrolyte layer 10a), such that negative electrode layer 38 of negative MPU 32 may be opposed to a positive electrode layer (i.e., layer 4a) of the BPU (i.e., BPU 2a) at that second end of stack 20 via the electrolyte layer 10a. MPUs 12 and 32 may be provided with corresponding positive and negative electrode leads 13 and 33, respectively.

It should be noted that the substrate and electrode layer of each MPU may form a cell segment 22 with the substrate and electrode layer of its adjacent BPU 2, and the electrolyte layer 10 therebetween, as shown in FIG. 3, for example (see, e.g., segments 22a and 22e). The number of stacked BPUs 2 in stack 20 can be one or more, and may be appropriately determined in order to correspond to a desired voltage for battery 50. Each BPU 2 can provide any desired potential, such that a desired voltage for battery 50 may be achieved by effectively adding the potentials provided by each component BPU 2. It will be understood that each BPU 2 need not provide identical potentials.

Bi-polar battery 50 can be structured so that BPU stack 20 and its respective positive and negative MPUs 12 and 32 may be at least partially encapsulated (e.g., hermetically sealed) into a battery case or wrapper 40 under reduced pressure. MPU conductive substrates 16 and 36 (or at least their respective electrode leads 13 and 33) may be drawn out of battery case 40, so as to mitigate impacts from the exterior upon usage and to prevent environmental degradation, for example. Indentations 42 may be provided in MPUs 12 and 32 for a low-profile casing and a flat surface.

In order to prevent electrolyte of a first cell segment (see, e.g., electrolyte 11a of cell segment 22a of FIG. 6) from combining with the electrolyte of another cell segment (see, e.g., electrolyte 11b of cell segment 22b of FIG. 6A), gasket or sealing means can be stacked with the electrolyte layers between adjacent electrode units to seal electrolyte within its particular cell segment. A gasket means or sealing means can be any suitable compressible or incompressible solid or viscous material, or combinations thereof, for example, that can interact with adjacent electrode units of a particular cell to seal electrolyte therebetween. In one suitable arrangement, as shown in FIGS. 3-4B, for example, the bi-polar battery of the invention can include a gasket or seal 60 that may be positioned as a barrier about electrolyte layer 10 and active material electrode layers 4/14 and 8/38 of each cell segment 22. The gasket or sealing means may be continuous and closed and can seal electrolyte between the gasket and the adjacent electrode units of that cell (i.e., the BPUs or the BPU and MPU adjacent to that gasket or seal). The gasket or sealing means can provide appropriate spacing between the adjacent electrode units of that cell, for example.

As will be described in more detail below, in one suitable approach, pressure can be applied to the top and bottom of case 40 in the direction of arrows P1 and P2 for compressing and holding cell segments 22 and gaskets 60 in the sealed configuration shown in FIGS. 3-4B, for example. In another suitable approach, pressure can be applied to the sides of case 40 in the direction of arrows P3 and P4 for compressing and holding cell segments 22 and gaskets 60 in the sealed configuration shown in FIGS. 3-4B, for example. In yet another suitable approach, pressure can be applied to the top and bottom of case 40 and pressure can also be applied to the sides of case 40 for compressing and holding cell segments 22 and gaskets 60 in the sealed configuration shown in FIGS. 3-4B, for example. Such a bi-polar battery 50 may include multiple cell segments 22 stacked and series-connected, as shown in FIG. 3A, to provide the desired voltage.

Referring now to FIG. 6, there is shown an exploded view of two particular cell segments 22 of battery 50, Cell segment 22a can include substrate 36 and negative electrode layer 38 of MPU 32, electrolyte layer 10a, as well as positive electrode layer 4a and substrate 6a of BPU 2a. Cell segment 22b can include substrate 6a and negative electrode layer 8a of BPU 2a, electrolyte layer 10b, as well as positive electrode layer 4b and substrate 6b of BPU 2b. As described above, each electrolyte layer 10 can include a separator 9 and an electrolyte 11. A sealing means or gasket 60 can be provided about electrolyte layer 10 of each cell segment 22 such that separator 9 and electrolyte 11 of that segment may be sealed within the space defined by gasket 60 and the adjacent electrode units of that particular cell segment.

As shown in FIGS. 6-8, for example, gasket 60a can surround electrolyte layer 10a such that its separator 9a and electrolyte 11a may be completely sealed within the space defined by gasket 60a, MPU 32, and BPU 2a of cell segment 22a. Likewise, as shown in FIGS. 6, 8, and 9, for example, gasket 60b can surround electrolyte layer 10b such that its separator 9b and electrolyte 11b may be completely sealed within the space defined by gasket 60b, BPU 2a, and BPU 2b of cell segment 22b.

The sealing or gasket means of each cell segment may form seals with various portions of the electrode units of the cell for sealing its electrolyte. As shown in FIGS. 6-9, for example, a gasket may form a seal with a portion of the top or bottom of a substrate (see, e.g., gasket 60a contacting the bottom side of substrate 36 and the top side of substrate 6a). Additionally, a gasket may form a seal with a portion of the external surface or edge of a substrate (see, e.g., portion 60aa of gasket 60a contacting the external edge of substrate 6a). Similarly, an external surface or edge of a gasket may form a seal with a portion of a substrate (see, e.g., the external edge of gasket 60b contacting portion 6bb of substrate 6b and the external edge of gasket 60c contacting portion 6bc of substrate 6b). Moreover, a gasket may form a seal with a portion of an active material electrode layer (see, e.g., gasket 60a contacting a portion of electrode layer 38 and a portion of electrode layer 4a).

Where a portion of a substrate extends beyond a gasket and the sealed portion of at least one of the cell segments defined by the substrate (e.g., substrate portions 6bb and 6bc of cell segments 22b and 22c, and the portions of substrate 36 extending beyond the external edges of gasket 60a of cell segment 22a), that portion of the substrate may be a cooling fin for its one or more adjacent cell segments. For example, such a substrate portion external to the sealed portion of its one or more adjacent cell segments may be exposed to the environment ambient to the cell stack or may contact the wrapper or case of the cell stack (e.g., as shown in FIG. 6). The ambient environment and/or wrapper may be considerably cooler than the sealed portions of the cell segments. This coolness may be transferred through the substrate from its portions external to the sealed portion of adjacent cell segments to these sealed portions themselves.

In order to create a better seal, one or more portions of the surface area of the gasket and the surface area of an adjacent electrode unit that contact each other may each be reciprocally or correspondingly grooved, chamfered, or shaped. At least a portion of a surface of a gasket may be shaped correspondingly to at least a portion of a surface of an electrode unit such that the two surfaces can mate together to restrict certain types of relative movement between the two surfaces and to self-align the gasket and the electrode unit during the manufacture of the battery, for example. As shown in FIGS. 6-9, for example, a detent means or groove means 70 can be formed along or by correspondingly or reciprocally shaped portions of a gasket and substrate at their respective area of mated contact with one another. This groove or detent means formed by the mating of reciprocally shaped portions of a gasket and adjacent substrate, for example, can thereby increase the size of their mated contact area and can thereby provide a larger path of resistance for any fluid (e.g., electrolyte) attempting to break the seal created between the mated contact area of the gasket and substrate.

The vertical cross-sectional shape of a groove between the correspondingly shaped surface portions of a gasket and an adjacent substrate (e.g., the shape of the mated gasket and substrate surface portions substantially in line with the direction of the vertical stack 20) may be of any suitable shape. For example, the vertical cross-sectional shape of a groove may be, but is not limited to, sinusoidal (see, e.g., groove 70a between substrate 36 and gasket 60a in FIG. 6), V-shaped (see, e.g., groove 70b between gasket 60a and substrate 6a in FIG. 6), rectangular (see, e.g., groove 70c between gasket 60b and substrate 6b in FIG. 6), or combinations thereof, for example. These vertical cross-sectional shapes of the grooves in line with the direction of the vertical stack may provide a greater surface area for the seal. Moreover, these vertical cross-sectional shapes of the grooves may provide a vertical aspect to the seal such that, as pressures internal to the cell segment increase and exert a force against the gaskets, a sealing force between the groove shaped portions of the gasket and adjacent electrodes may also increase.

Furthermore, the horizontal cross-sectional shape or path of a groove between the correspondingly shaped surface portions of a gasket and an adjacent substrate about the electrode layer or layers of its associated substrate (e.g., the shape or path of the mated gasket and substrate surface portions substantially perpendicular to the direction of the vertical stack 20) may be of any suitable design. For example, the horizontal cross-sectional path of a groove may be continuous about and substantially equidistant from the electrode layer or layers of its associated substrate (see, e.g., groove 70a that may be continuous about and uniformly spaced from electrode layer 38 at all points in the mated surface portions of gasket 60a and substrate 36, as shown in FIGS. 6 and 7). Alternatively, the horizontal cross-sectional path of a groove may be continuous about, but not equidistant from, the electrode layer or layers of its associated substrate (see, e.g., groove 70b that may be continuous about, but not uniformly spaced from, electrode layers 4a and 8a at all points in the mated surface portions of gasket 60a and substrate 6a, as shown in FIGS. 6 and 8). The horizontal cross-sectional path of a groove may be non-continuous or segmented about the electrode layer or layers of its associated substrate (see, e.g., groove 70c that may only extend about a portion of electrode layers 4b and 8b in the mated surface. portions of gasket 60b and substrate 6b, as shown in FIGS. 6 and 9), for example.

It is to be understood that the shapes, sizes, and paths of the grooves provided by the correspondingly shaped surface portions of adjacent gaskets and electrode units described herein are only exemplary, and any various suitable sizes, shapes, and path designs can be used to create such grooves. Furthermore, no groove may be created between a gasket and adjacent electrode unit in accordance with certain embodiments of the present invention, such that the surface area of the gasket and the surface area of an adjacent electrode unit that contact each other are both substantially flat or planar.

The substrates used to form the electrode units of the invention (e.g., substrates 6, 16, and 36) may be formed of.any suitable conductive and impermeable material, including, but not limited to, a non-perforated metal foil, aluminum foil, stainless steel foil, cladding material comprising nickel and aluminum, cladding material comprising copper and aluminum, nickel plated steel, nickel plated copper, nickel plated aluminum, gold, silver, or combinations thereof, for example. Each substrate may be made of two or more sheets of metal foils adhered to one another. The substrate of each BPU may typically be between 1 and 5 millimeters thick, while the substrate of each MPU may be between 5 and 10 millimeters thick and act as terminals to the battery, for example. Metalized foam, for example, may be combined with any suitable substrate material in a flat metal film or foil, for example, such that resistance between active materials of a cell segment can be reduced by expanding the conductive matrix throughout the electrode.

The positive electrode layers provided on these substrates to form the electrode units of the invention (e.g., positive electrode layers 4 and 14) may be formed of any suitable active material, including, but not limited to, nickel hydroxide (Ni(OH)₂) , zinc (Zn), or combinations thereof, for example. The positive active material may be sintered and impregnated, coated with an aqueous binder and pressed, coated with an organic binder and pressed, or contained by any other suitable method of containing the positive active material with other supporting chemicals in a conductive matrix. The positive electrode layer of the electrode unit may have particles, including, but not limited to, metal hydride (MH), Pd, Ag, or combinations thereof, infused in its matrix to reduce swelling, for example. This can increase cycle life, improve recombination, and reduce pressure within the cell segment, for example. These particles, such as MH, may also be in a bonding of the active material paste, such as Ni(OH)₂, to improve the electrical conductivity within the electrode and to support recombination.

The negative electrode layers provided on these substrates to form the electrode units of the invention (e.g., negative electrode layers 8 and 38) may be formed of any suitable active material, including, but not limited to, MH, Cd, Mn, Ag, or combinations thereof, for example. The negative active material may be sintered, coated with an aqueous binder and pressed, coated with an organic binder and pressed, or contained by any other suitable method of containing the negative active material with other supporting chemicals in a conductive matrix, for example. The negative electrode side may have chemicals including, but not limited to, Ni, Zn, Al, or combinations thereof, infused within the negative electrode material matrix to stabilize the structure, reduce oxidation, and extend cycle life, for example.

Various suitable binders, including, but not limited to, organic CMC binder, Creyton rubber, PTFE (Teflon), or combinations thereof, for example, may be mixed with the active material layers to hold the layers to their substrates. Ultra-still binders, such as 200 ppi nickel foam, may also be used with the stacked battery constructions of the invention.

The separator of each electrolyte layer of the battery of the invention (e.g., separator 9 of each electrolyte, layer 10) may be formed of any suitable material that electrically isolates its two adjacent electrode units while allowing ionic transfer between those electrode units. The separator may contain cellulose super absorbers to improve filling and act as an electrolyte reservoir to increase cycle life, wherein the separator may be made of a polyabsorb diaper material, for example. The separator could, thereby, release previously absorbed electrolyte when charge is applied to the battery. In certain embodiments, the separator may be of a lower density and thicker than normal cells so that the InterElectrode-Spacing (IES) can start higher than normal and be continually reduced to maintain the C-rate and capacity of the battery over its life as well as to extend the life of the battery.

The separator may be a thinner than normal material bonded to the surface of the active material on the electrode units to reduce shorting and improve recombination. This separator material could be sprayed on, coated on, or pressed on, for example. The separator may have a recombination agent attached thereto, in certain embodiments. This agent could be infused within the structure of the separator (e.g., this could be done by physically trapping the agent in a wet process using a PVA to bind the agent to the separator fibers, or the agent could be put therein by electro-deposition), or it could be layered on the surface by vapor deposition, for example. The separator may be made of any suitable material or agent that effectively supports recombination, including, but not limited to, Pb, Ag, or combinations thereof, for example. While the separator may present a resistance if the substrates of a cell move toward each other, a separator may not be provided in certain embodiments of the invention that may utilize substrates stiff enough not to deflect.

The electrolyte of each electrolyte layer of the battery of the invention (e.g., electrolyte 11 of each electrolyte layer 10) may be formed of any suitable chemical compound that can ionize when dissolved or molten to produce an electrically conductive medium. The electrolyte may be a standard electrolyte of any suitable chemical, such as, but not limited to, NiMH, for example. The electrolyte may contain additional chemicals, including, but not limited to, lithium hydroxide (LiOH), sodium hydroxide (NaOH), calcium hydroxide (CaOH), potassium hydroxide (KOH), or combinations thereof, for example. The electrolyte may also contain additives to improve recombination, such as, but not limited to, Ag(OH)₂, for example. The electrolyte may also contain RbOH, for example, to improve low temperature performance. In some embodiments of the invention, the electrolyte (e.g., electrolyte 11) may be frozen within the separator (e.g., separator 9) and then thawed after the battery is completely assembled. This can allow for particularly viscous electrolytes to be inserted into the electrode unit stack of the battery before the gaskets have formed substantially fluid tight seals with the electrode units adjacent thereto.

The seals or gaskets of the battery of the invention (e.g., gaskets 60) may be formed of any suitable material or combination of materials that may effectively seal an electrolyte within the space defined by the gasket and the electrode units adjacent thereto. The gasket can be formed from a solid seal barrier or loop, or multiple loop portions capable of forming a solid seal loop, that may be made of any suitable nonconductive material, including, but not limited to, nylon, polypropylene, cell gard, rubber, PVOH, or combinations thereof, for example. A gasket formed from a solid seal barrier may contact a portion of an adjacent electrode to create a seal therebetween.

Alternatively, the gasket can be formed from any suitable viscous material or paste, including, but not limited to, epoxy, brea tar, electrolyte (e.g., KOH) impervious glue, compressible adhesives (e.g., two-part polymers, such as Loctite^{®} brand adhesives made available by the Henkel Corporation, that may be formed from silicon, acrylic, and/or fiber reinforced plastics (FRPs) and that may be impervious to electrolytes), or combinations thereof, for example. A gasket formed from a viscous material may contact a portion of an adjacent electrode to create a seal therebetween. A gasket can be formed by a combination of a solid seal loop and a viscous material, such that the viscous material may improve sealing between the solid seal loop and an adjacent electrode unit. Alternatively or additionally, an electrode unit itself can be treated with viscous material before a solid seal loop, a solid seal loop treated with additional viscous material, an adjacent electrode unit, or an adjacent electrode unit treated with additional viscous material, is sealed thereto, for example.

As described below in more detail, a gasket formed by a solid seal loop and/or viscous paste may be compressible to improve sealing. The compression may be about 5% in certain embodiments, but can be whatever elasticity is needed to insure a good seal.

Moreover, a gasket or sealing means between adjacent electrode units may be provided with one or more weak points that can allow certain types of fluids (i.e., certain liquids or gasses) to escape therethrough (e.g., if the internal pressures in the cell segment defined by that gasket increases past a certain threshold). Once a certain amount of fluid escapes or the internal pressure decreases, the weak point may reseal. A gasket formed at least partially by certain types of suitable viscous material or paste, such as brai, may be configured or prepared to allow certain fluids to pass therethrough and configured or prepared to prevent other certain fluids to pass therethrough. Such a gasket may prevent any electrolyte from being shared between two cell segments that could cause the voltage and energy of the battery to fade (i.e., discharge) quickly to zero.

As mentioned above, one benefit of utilizing batteries designed with sealed cells in a stacked formation (e.g., bi-polar battery 50) can be an increased discharge rate of the battery. This increased discharge rate can allow for the use of certain less-corrosive electrolytes (e.g., by removing or reducing the whetting, conductivity enhancing, and/or chemically reactive component or components of the electrolyte) that otherwise might not be feasible in prismatic or wound battery designs. This leeway that may be provided by the stacked battery design to use less-corrosive electrolytes can allow for certain epoxies (e.g., J-B Weld epoxy) to be utilized when forming a seal with gaskets that may otherwise be corroded by more-corrosive electrolytes.

The case or wrapper of the battery of the invention (e.g., case 40) can be formed of any suitable nonconductive material that can seal to the terminal electrode units (e.g., MPUs 12 and 32) for exposing their conductive substrates (e.g., substrates 16 and 36) or their associated leads (i.e., leads 13 and 33). The wrapper can also be formed to create, support, and/or maintain the seals between the gaskets and the electrode units adjacent thereto for isolating the electrolytes within their respective cell segments. The wrapper can create and/or maintain the support required for these seals such that the seals can resist expansion of the battery as the internal pressures in the cell segments increase. The wrapper may be made of any suitable material, including, but not limited to, nylon, any other polymer or elastic material, including reinforced composites, or shrink wrap material, or any rigid material, such as enamel coated steel or any other metal, or combinations thereof, for example. In certain embodiments, the wrapper may be formed by an exoskeleton of tension clips, for example, that may maintain continuous pressure on the seals of the stacked cells. A non-conductive barrier may be provided between the stack and wrapper to prevent the battery from shorting.

With continued reference to FIG. 3, for example, bi-polar battery 50 of the invention can include a plurality of cell segments (e.g., cell segments 22a-22e) formed by MPUs 12 and 32, and the stack of one or more BPUs 2 (e.g., BPUs 2a-2d) therebetween. The thicknesses and materials of each one of the substrates (e.g., substrates 6a-6d, 16, and 36), the electrode layers (e.g., positive layers 4a-d and 14, and negative layers 8a-8d and 38), the electrolyte layers (e.g., layers 10a-10e), and the gaskets (e.g., gaskets 60a-60e) may differ from one another, not only from cell segment to cell segment, but also within a particular cell segment. This variation of geometries and chemistries, not only at the stack level, but also at the individual cell level, can create batteries with a plethora of different benefits and performance characteristics.

For example, a particular side of a particular substrate of a particular electrode unit may be coated with a variety of active materials along different portions thereof for forming a positive active material electrode layer. As shown in FIGS. 4A and 4B, for example, one side of substrate 6a of BPU 2a may include an outermost portion 4a', a middle portion 4a'', and an innermost portion 4a''' for forming positive active material electrode layer 4a. Each one of portions 4a'-4a''' may be coated by a different active material, may be of a different thickness (e.g., thicknesses 4at', 4at'', and 4at'''), and/or may be of a different height (e.g., heights 4ah', 4ah'', and 4ah'''), for example.

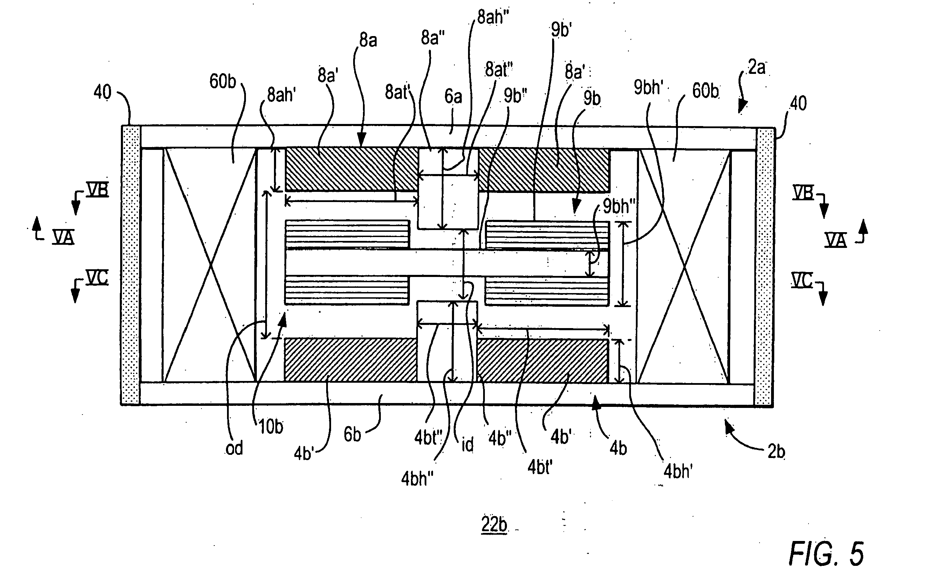

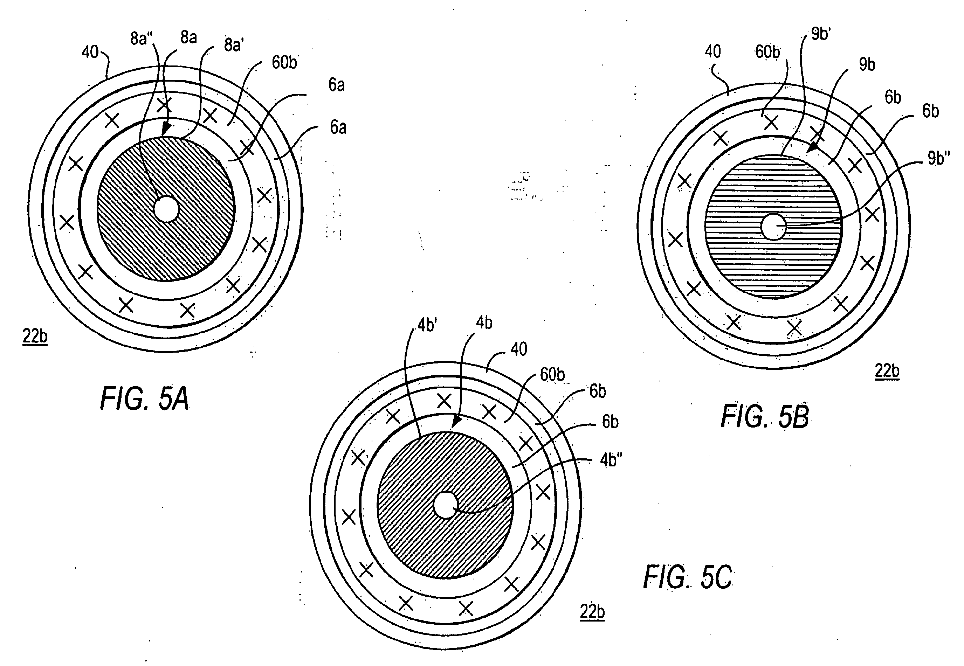

When there is a need for a battery system'to provide optimum performance with respect to various operating parameters, it may be beneficial to simultaneously operate and control the use of two independent batteries that each have their own strengths and weaknesses. For example, in the case of electric vehicles (EVs) and hybrid electric vehicles (HEVs), there is a need for a battery system that not only provides specifically adequate energy storage capabilities for long distance trips, but that also provides specifically adequate charging and discharging rates for accelerating and decelerating safely on the open road. A zinc manganese battery that is known for its robust energy storage capabilities may be controlled in tandem with a nickel metal hydride battery that is known for its high charge/discharge rate capabilities, for example, to provide an adequate battery system for any electric vehicle. According to certain embodiments of the invention, various chemistries and geometries may be used within particular cell segments of a battery to optimize that battery for multiple functions, such as energy storage, regulation of self-discharge for long shelf-life, and high charge/discharge rates, as will now be described with respect to cell segment 22b and FIGS. 5-5C, for example.

As shown, one side of substrate 6a of BPU 2a may include an outermost portion 8a' and an innermost portion 8a'' for forming negative active material electrode layer 8a. Outermost portion 8a' may be made of a negative outermost material, may have an outermost thickness (e.g., outermost thickness 8at'), and may have an outermost height (e.g., outermost height 8ah'), while innermost portion 8a''may be made of a negative innermost material, may have an innermost thickness (e.g., innermost thickness 8at''), and may have an innermost height (e.g., innermost height 8ah''), for example. The geometry of outermost portion 8a' (e.g., height 8ah' and thickness 8at') may make up 80% of the negative active:materials of negative electrode layer 8a, while the geometry of innermost portion 8a'' (e.g., height 8ah'' and thickness 8at'') may make up 20% of the negative active materials of negative electrode layer 8a, for example.

Similarly, one side of substrate 6b of BPU 2b may include an outermost portion 4b' and an innermost portion 4b'' for forming positive active material electrode layer 4b. Outermost portion 4b' may be made of a positive outermost material, may have an outermost thickness (e.g., outermost thickness 4bt'), and may have an outermost height (e.g., outermost height 4bh.), while innermost portion 4b'' may be made of a positive innermost material, may have an innermost thickness (e.g., innermost thickness 4bt''), and may have an innermost height (e.g., innermost height 4bh''), for example. The geometry of outermost portion 4b' (e.g., height 4bh' and thickness 4bt') may make up 80% of the positive active materials of positive electrode layer 4b, while the geometry of innermost portion 4b'' (e.g., height 4bh'' and thickness 4bt'') may make up 20% of the positive active materials of positive electrode layer 4b, for example.

Moreover, electrode 2a and electrode 2b may be separated by various geometries and by various separator materials along various portions thereof. For example, outermost portion 8a' and outermost portion 4b' may be separated by an outermost distance od, due to their geometries (e.g., height 8ah' and height 4bh'), whereas innermost portion 8a'' and innermost portion 4b'' may only be separated by an innermost distance id, once the battery is stacked, sealed, and held by wrapper 40, for example.

Two separator portions (e.g., outermost separator portion 9b' and innermost separator portion 9b'') of separator 9b may be provided in electrolyte layer 10b of cell segment 22b. These outermost and innermost separator portions may have different heights (e.g., outermost separator height 9bh' and innermost separator height 9bh''). These heights may or may not correspond to the different distances between outermost electrode portions 8a' and 4b' (e.g., outermost distance od) and innermost electrode portions 8a'' and 4b'' (e.g., innermost distance id), respectively, according to different embodiments of the invention. For example, in certain embodiments, the distance between certain portions of the electrode layers may be larger than the distance between certain other portions of the electrode layers. For example, outermost distance od between outermost electrode portions 8a' and 4b' may be about 5 millimeters, while innermost distance id between innermost electrode portions 8a'' and 4b'' may be about 1 millimeter.

Moreover, each one of outermost and innermost separator portions 9b' and 9b'' may be made of different separator materials such that each separator portion may be designed to control the specific dendrites that can be created on its respective electrode portions (e.g., outermost portions 8a'/4b' and innermost portions 8a''/4b''), which may have different chemistries themselves. The active materials of each of the various portions of the cell may have different densities. Each of the various separator portions of the cell may be made of different materials and/or may each be provided with their own unique surface treatments, porosities, tensile properties, and/or compression properties, for example. Acell segment can differentiate electrolyte dispersion and concentration by using different whetting agents or treatments on the separator, for example. Therefore, one or more concentration zones may be created in certain portions of the separator (e.g., portion 9b' or 9b") for better ionic transfer therethrough (e.g., for better power or heat transfer or better electrochemical efficiency or better gas recombination within the cell). Likewise, various binder systems, such as CMC, Crayton, metal foam, PTFE, and PVOH, for example, may be used to apply each of the various active material electrode portions to a substrate of the multiple chemistry cell segment for achieving a balance of power, energy density, and/or cycle life of the cell, for example.

When there is a need for a battery that can provide specifically adequate energy storage capabilities as well as specifically adequate charging and discharging rates, as described above with respect to the field of electric vehicles, for example, the geometries and chemistries of each of negative active material electrode layer 8a and positive active material electrode layer 4b may be varied within cell segment 22b. For example, outermost portion 4b' and outermost portion 8a', each of whose geometry may make up 80% of the active materials of its respective electrode layer, may be substantially made of zinc manganese (ZnMn) and may function as a first component of cell 22b, primarily geared towards energy storage. On the other hand, innermost portion 4b'' and innermost portion 8a'', each of whose geometry may make up 20% of the active materials of its respective electrode layer, for example, may be substantially made of nickel metal hydride (NiMH) and may function as a second component of cell 22b, primarily geared towards rapid charge/discharge rates.

Due to the behaviors of these combined chemistries, they may compliment each other in a single cell segment. For example, the NiMH portion of the cell may limit over-discharge of the ZnMn portion under pulse discharge and may therefore extend the cycle life of the ZnMn portion because the ZnMn portion may not be driven to a low voltage that forms dendrites.
Likewise, the ZnMn portion of the cell may extend shelf life and may reduce self discharge of the NiMh portion of the cell by holding the NiMh portion at a high state of charge. This is contrary to the natural tendency of an NiMH cell to self discharge, whereby the MH electrode corrodes at low starts of charge and reduces the life of the NiMh. Therefore, two or more varied chemistries provided within a cell segment can act as a controller between the functions of the various chemistries.

As another example, the combination of multiple electrochemistries in the same cell may take advantage of the various electrochemical properties of heating and cooling to regulate the cell temperature. In one embodiment, a first portion of the active materials of a cell segment may be made of nickel cadmium (NiCad) and a second portion may be made of zinc manganese, for example. On discharge of such a cell, the NiCad portion may be exothermic and may warm up the other portions of the cell (e.g., the ZnMn portion) in cold conditions. On recharge, the NiCad portion of the cell may be endothermic and may cool down the other cell portions by absorbing heat. Thus, the NiCad chemistry portion may help cool the other chemistry portion or portions of the cell that may typically be hot at the end of a discharge, thereby increasing the recharge rate and extending the cycle life of the cell by reducing thermal stress. The various chemistries of the cell may be positioned such that the cooling chemistry or chemistries (e.g., NiCad) may be in the center of the cell or at least internal to the other chemistries of the cell that need cooling, as opposed to placing the cooling chemistry portion or portions at the edge of the cell where it may be easier to remove heat.

Additionally, besides varying the materials and geometries of the substrates, electrode layers, electrolyte layer, or gaskets within a particular cell segment, as described above (see, e.g., FIGS. 4-5C), the materials and geometries of the substrates, electrode layers, electrolyte layers, and gaskets can vary along the height of the stack from cell segment to cell segment. With further reference to FIG. 3, for example, the electrolyte 11 used in each of the electrolyte layers 10 of battery 50 may vary based upon how close its respective cell segment 22 is to the middle of the stack of cell segments. For example, innermost cell segment 22c (i.e., the middle cell segment of the five (5) segments 22 in battery 50) may include an electrolyte layer (i.e., electrolyte layer 10c) that is formed of a first electrolyte, while middle cell segments 22b and 22d (i.e., the cell segments adjacent the terminal cell segments in battery 50) may include electrolyte layers (i.e., electrolyte layers 10b and 10d, respectively) that are each formed of a second electrolyte, while outermost cell segments 22a and 22e (i.e., the outermost cell segments in battery 50) may include electrolyte layers (i.e., electrolyte layers 10a and 10e, respectively) that are each formed of a third electrolyte. By using higher conductivity electrolytes in the internal stacks, the resistance could be lower such that the heat generated could be less. This could provide thermal control to the battery by design instead of by external cooling methods.

As another example, the active materials used as electrode layers in each of the cell segments of battery 50 may also vary based upon how close its respective cell segment 22 is to the middle of the stack of cell segments. For example, innermost cell segment 22c may include electrode layers (i.e., layers 8b and 4c) formed of a first type of active materials having a first temperature and/or rate performance, while middle cell segments 22b and 22d may include electrode layers (i.e., layers 8a/4b and layers 8c/4d) formed of a second type of active materials having a second temperature and/or rate performance, while outermost cell segments 22a and 22e may include electrode layers (i.e., layers 38/4a and layers 8d/14) formed of a third type of active materials having a third temperature and/or rate performance. As an example, a battery stack could be thermally managed by constructing the innermost cell segments with electrodes of nickel cadmium, which can better at taking heat, while the outermost cell segments could be provided with electrodes of nickel metal hydride, which may need to be cooler, for example. Alternatively, the chemistries or geometries of the battery may be asymmetric, where the cell segments at one end of the stack can be made of a first active material and a first height, while the cell segments at the other end of the stack can be of a second active material and a second height.

Moreover, the geometries of each of the cell segments of battery 50 may also vary along the stack of cell segments. Besides varying the distance between active materials within a particular cell segment (see, e.g., distances id and od of FIG. 5), certain cell segments 22 may have a first distance between the active materials of those segments (see, e.g., distance id or od of FIG. 5), while other cell segments may have a second distance between the active materials of those segments. In any event, the cell segments or portions thereof having smaller distances between active material electrode layers may have higher power, for example, while the cell segments or portions thereof having larger distances between active material electrode layers may have more room for dendrite growth, longer cycle life, and/or more electrolyte reserve, for example. These portions with larger distances between active material electrode layers may regulate the charge acceptance of the battery to ensure that the portions with smaller distances between active material electrode layers can charge first, for example.

The voltage range of a first chemistry can electrically operate within the voltage range of a second chemistry when the first and second chemistries are to be combined and balanced in a particular cell segment for sharing a common electrolyte. For example, NiMH may have a voltage range of between about 1.50 VDC and about 0.80 VDC, while ZnMn may have a voltage range of between about 1.75 VDC and about 0.60 VDC. Therefore, multiple electrochemistries within a single cell may be balanced by matching capacities. The mixed chemistries may also be electronically matched by performing electrochemical balancing with control electronics similarly to the way cell balancing is commonly done within a single battery chemistry pack, for example. The voltage differential between two or more electrochemistries may be adjusted, continuously or by pulse, over their full discharge and recharge profiles, for example.

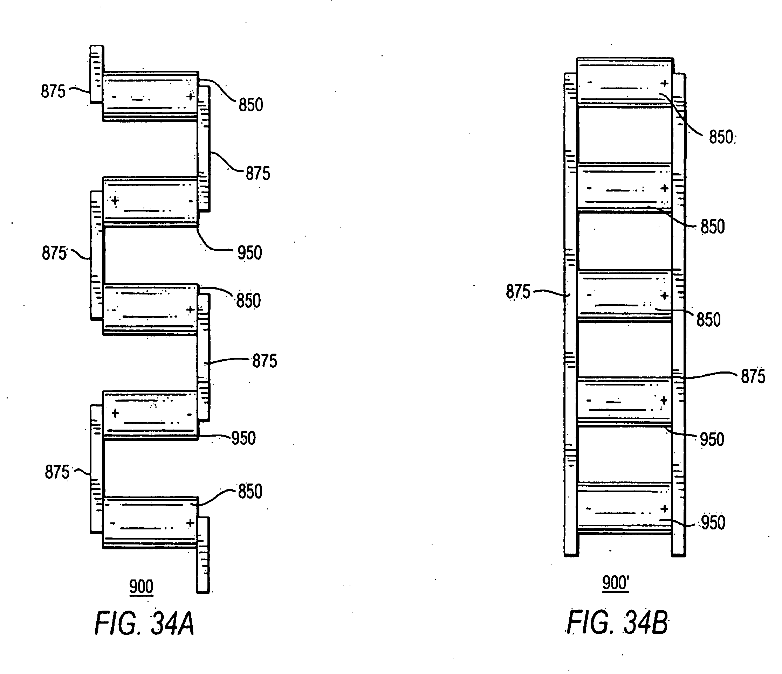

However, when different designs are used from one cell to the next, the resistance may be different between the cells and voltage balancing may also be required. When balancing various cells of different designs, external capacity balancing may be done by placing a certain number of single cells in parallel, while external voltage balancing may be done by placing a certain number of single cells in series. For example, any type of battery cell may be combined with any other type of battery cell of a different electrochemistry to form a mixed electrochemistry battery pack. As shown in FIGS. 34A and 34B, for example, a number of first battery cells 850 of a first electrochemistry may be linked in various ways with a number of second battery cells 950 of a second electrochemistry to form a mixed electrochemistry battery pack. Battery cells 850 and 950 may each be any of various types of battery cells, including, but not limited to, prismatic battery cells, wound battery cells, MPU battery cells, or BPU battery cells. In FIG. 34A, for example, a battery pack 900 may be formed and balanced by externally linking three 1.2 V NiMH double-A battery cells 850 in series with two 1.5 V ZnMn double-A battery cells 950 via links 875. While, in FIG. 34B, for example, a battery pack 900' may be formed and balanced by externally linking three 1.2 V NiMH double-A battery cells 850 in parallel with two 1.5 V ZnMn double-A battery cells 950 via links 875.

One of the many benefits of combining multiple electrochemistries into a battery, either as described above with respect to multiple chemistries within a single cell (see, e.g., FIGS. 1-9), or as described above with respect to multiple single chemistry cells linked with other multiple single chemistry cells (see, e.g., FIGS. 34A and 34B), is that the formation or charging step of the battery may be skipped. For example, with respect to cell segment 22b of FIGS. 5-5C, wherein a first portion of the active material electrodes may be of ZnMn and another portion may be of NiMH, the ZnMn portion in its natural state may already be charged when provided on the substrates of the cell segment while the NiMH portion may need to be formed or charged once provided on the substrates. Due to the mixed chemistry of such a cell, the ZnMn portion of the cell segment may act as a natural charger and may form the NiMH portion of that cell such that it can be ready for standard charge/discharge use without requiring the conventional charging step. Therefore, by providing and mixing certain electrochemistries with other electrochemistries, either within a cell or among different cells in a battery, one or more of the multiple electrochemistries may be able to naturally charge one or more of the other electrochemistries in the battery such that the conventional and complex cell formation/charging step of manufacturing the battery may be skipped.

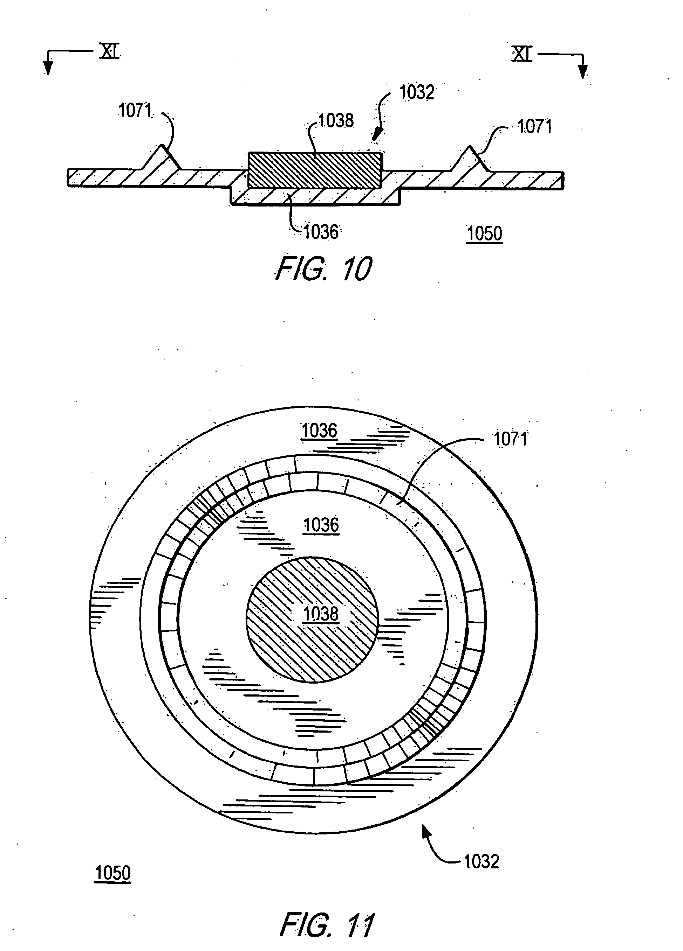

As mentioned above, a method of producing the bi-polar battery of this invention may generally include the steps of providing an MPU and stacking one or more BPUs thereon with electrolyte layers and gaskets therebetween, before finally topping off the stack with another MPU of opposite polarity. For example, a method of producing a stacked bi-polar battery 1050 according to the invention is described with respect to FIGS. 10-20. For example, with respect to FIGS. 10 and 11, a negative MPU 1032 may initially be provided with an impermeable conductive substrate 1036 and a negative active material electrode layer 1038 coated thereon. Substrate 1036 may be provided with a groove shaped portion 1071 at least partially about negative layer 1038.

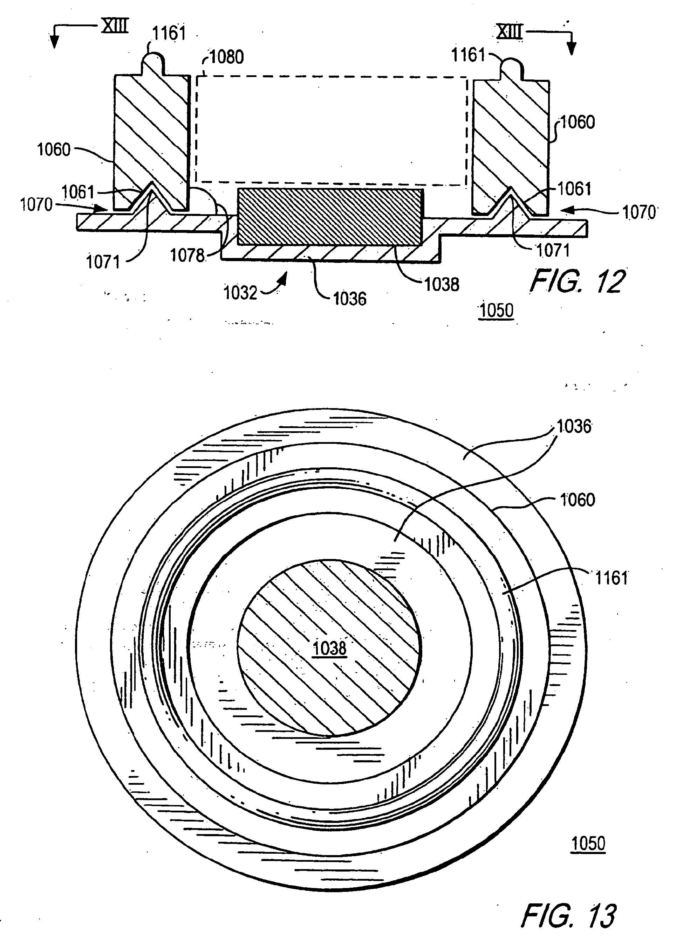

Next, a gasket 1060 can be stacked upon substrate 1036 about electrode layer 1038 (see, e.g., FIGS. 12 and 13). A groove shaped portion 1061 may be chamfered into the side of gasket 1060 that contacts substrate 1036, such that groove shaped portions 1061 and 1071 may align to create a grooved contact surface area or groove 1070 between the gasket and the substrate. These reciprocal groove shaped portions may aid in the self-alignment of the gasket with respect to the MPU as it is stacked thereupon, thereby simplifying this production step. These reciprocal groove shaped portions in the surfaces of the gasket and MPU may also mate together to restrict certain types of relative movement between the two surfaces. For example, the mated interaction of groove shaped portions 1061 and 1071, and therefore the resulting grooved contact surface area or groove 1070, may restrict gasket 1060 and MPU 1032 from moving relative to one another in a direction substantially perpendicular to the direction of the vertical stack (i.e., groove 1070 may prevent gasket 1060 and MPU 1032 from moving horizontally out of line from one another when stacked vertically).

Once gasket 1060 has been stacked on top of MPU 1032, a substantially fluid tight cup-shaped receptacle (see, e.g., space 1080) may thus be defined by the inner side walls of gasket 1060 and the portions of MPU 1032 therebetween. The angle formed between the inner side walls of the gasket and the portions of the electrode unit therebetween (e.g., angle 1078 between the inner side walls of gasket 1060 and the portions of MPU 1032 therebetween in FIG. 13) may be of any suitable angle, including right angles, obtuse angles, or acute angles.

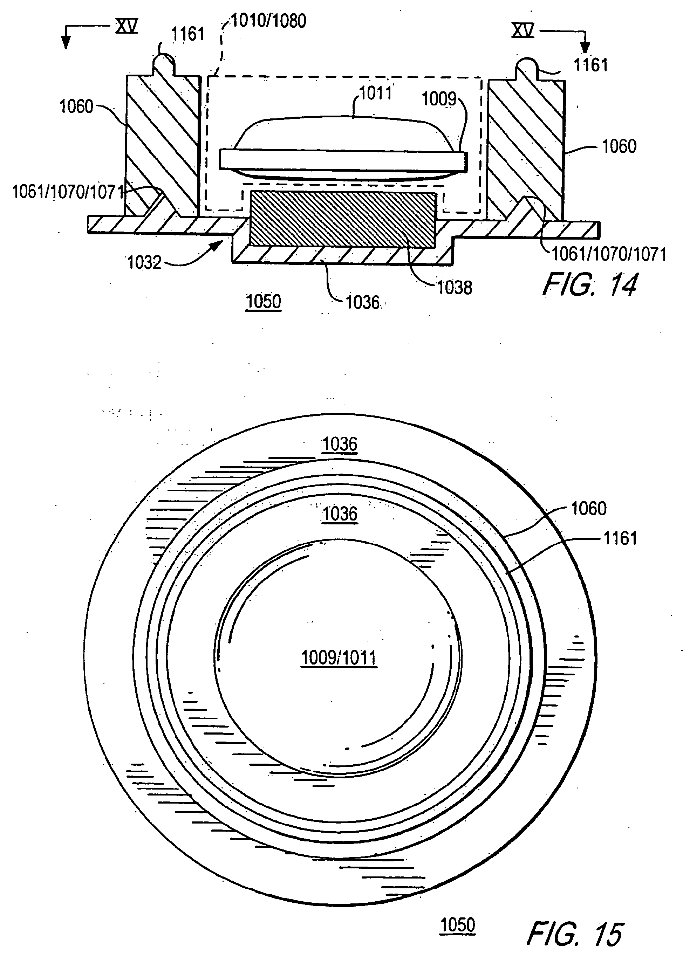

Next, a separator 1009 and an electrolyte 1011 may be deposited within the inner walls of gasket 1060 on top of negative electrode layer 1038 to define an electrolyte layer 1010 within the space 1080 (see, e.g., FIGS. 14 and 15). When the electrolyte to be used is quite viscous, the seal created between the gasket and the MPU may allow for the electrolyte to be easily injected into space 1080 without chance of leaking. It is to be understood that if the electrolyte is not viscous upon insertion into the stack (e.g., in the embodiment where the electrolyte is frozen within the separator), the electrolyte layer may be stacked upon the MPU before the gasket is fitted thereon.

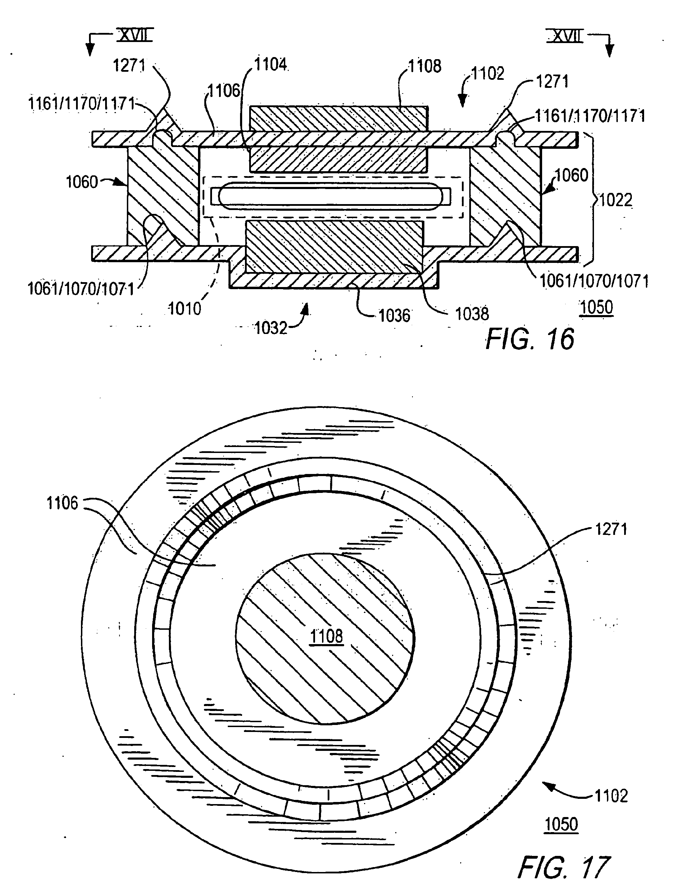

Once separator 1009 and electrolyte 1011 of electrolyte layer 1010 have been deposited within space 1080 defined by gasket 1060 and MPU 1032, a first BPU 1102 may be stacked thereupon (see, e.g., FIGS. 16 and 17). As shown in FIG. 16, BPU 1102 can include an impermeable conductive substrate 1106 having a positive electrode layer 1104 and a negative electrode layer 1108 coated on opposite sides thereof. Substrate 1106 can be provided with a groove shaped portion 1171 on one of its sides at least partially about positive electrode layer 1104 and/or electrode layer 1108 of BPU 1102. With positive electrode layer 1104 of BPU 1102 facing downwards towards negative electrode layer 1038 of MPU 1032, BPU 1102 can be stacked upon gasket 1060, such that a groove shaped portion 1161 provided on the top of gasket 1060 and groove shaped portion 1171 of substrate 1106 may align and create a grooved contact surface area or groove 1170 between the gasket and the substrate. These reciprocal groove shaped portions may aid in the self-alignment of the BPU with respect to the gasket, and therefore the MPU, as the BPU is stacked upon the gasket, thereby simplifying this production step. Once BPU 1102 has been stacked on top of gasket 1060, and thus MPU 1032, a first cell segment 1022 may exist. Moreover, a substantially fluid tight seal may thereby be defined by substrate 1106, substrate 1036, and gasket 1060 about electrolyte layer 1010 (and thus electrolyte 1011).

It should be noted that, while groove shaped portion 1161 on the top of gasket 1060 (and thus groove shaped portion 1171 on the bottom of substrate 1106) may be of the same size, shape, and form (e.g., both in their horizontal and vertical cross-sections) as that of groove shaped portion 1061 on the bottom of gasket 1060, the groove shaped portions on the top and bottom of the gasket may be different from one another, as shown in FIG. 16, for example. Similarly, the groove shaped portions provided on the top and bottom of each substrate of the electrode units may vary with respect to one another (see, e.g., groove shaped portions 1171 and 1271 of BPU 1102 in FIG. 16).

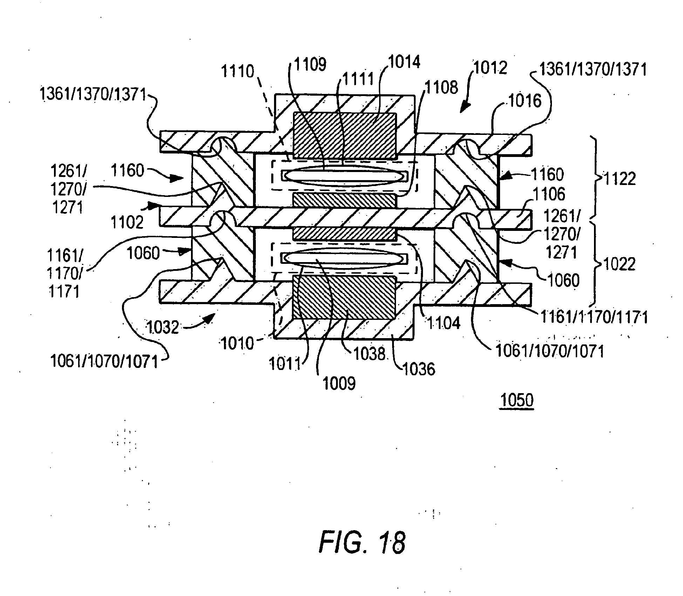

Once this first cell segment 1022 has been created by stacking gasket 1060, electrolyte layer 1010, and BPU 1102 on top of MPU 1032, as described above with respect to FIGS. 10-17, additional BPUs may be stacked thereon in a similar fashion, if desired. Once the desired amount of BPUs has been stacked for the bi-polar battery, a second MPU can be stacked thereon. With reference to FIG. 18, a positive MPU 1012 may be stacked on top of the top most BPU (in this embodiment, only one BPU has been provided, therefore BPU 1102 is that top most BPU). However, before MPU 1012 is stacked upon BPU 1102, an additional gasket (i.e., gasket 1160 with bottom groove shaped portion 1261 and top groove shaped portion 1361) and electrolyte layer (i.e., electrolyte layer 1110 with separator 1109 and-electrolyte 1111) may be provided as described above with respect to gasket 1060 and electrolyte layer 1010. For example, groove shaped portions 1261 and 1271 may align to create a grooved contact surface area or groove 1270 between gasket 1160 and substrate 1106. These reciprocal groove shaped portions may aid in the self-alignment of gasket 1160 with respect to BPU 1102 as it is stacked thereupon, thereby simplifying this production step.

Positive MPU 1012 can be provided with an impermeable conductive substrate 1016 and a positive active material electrode layer 1014 coated thereon. Substrate 1016 can be provided with a groove shaped portion 1371 at least partially about positive layer 1014. With positive electrode layer 1014 of MPU 1012 facing downwards towards negative electrode layer 1108 of BPU 1102, MPU 1012 can be stacked upon gasket 1160, such that groove shaped portion 1361 provided on the top of gasket 1160 and groove shaped portion 1371 of substrate 1016 may align and create a grooved contact surface area or groove 1370 between the gasket and the substrate. These reciprocal groove shaped portions may aid in the self-alignment of positive MPU 1012 with respect to gasket 1160, and therefore BPU 1102, gasket 1060, and negative MPU 1032, as it is stacked thereupon. This self-aligning feature of the bi-polar battery of the invention may significantly simplify this production step. Once MPU 1012 has been stacked firmly on top of gasket 1160, and thus BPU 1102, a second cell segment (i.e., segment 1122) may exist. Moreover, a substantially fluid tight seal may thereby be defined by substrate 1016, substrate 1106, and gasket 1160 about electrolyte layer 1110 (and thus electrolyte 1111).

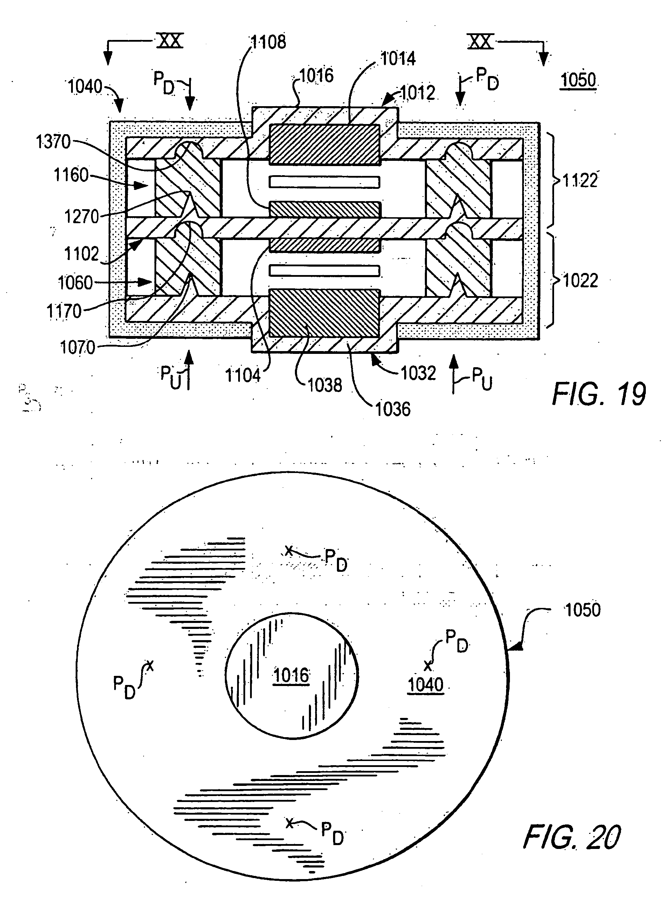

Once a stack is manufactured to include a positive MPU, a negative MPU, and at least one BPU therebetween, thereby forming a stack of cell segments, as described above with respect to FIGS. 10-18, for example, a case or wrapper may be provided to seal the contents of the stack for forming a functional stacked bi-polar battery of the invention. In a first embodiment, as shown in FIGS. 19 and 20, a wrapper 1040 can be provided about the slack of cell segments (i.e., cell segments 1022 and 1122), such that the terminal electrode layers (i.e., positive electrode layer 1014 and negative electrode layer 1038) may be exposed (e.g., via at least a portion of conductive substrates 1016 and 1036, respectively), and such that a C-shaped clamping arrangement may be provided by the wrapper about the contents of the stack to provide a stacked bi-polar battery 1050.

For example, pressure can be exerted by the wrapper both downward onto substrate 1016 of MPU 1012 in the direction of arrows P_{D} as well as upward onto substrate 1036 of MPU 1032 in the direction of arrows P_{U}. In certain embodiments of the invention, the pressure exerted by the wrapper in the direction of each of arrows P_{U} and P_{D} can be substantially in line or parallel with the vertical stacking direction of the cell segments of the battery. Moreover, the clamping pressure exerted by the wrapper may be substantially peripheral or external to each of the active materials of the electrode units of the stack (e.g., electrode layers 1014, 1104, 1108, and 1038) rather than in line with any of the active materials, such that the clamping pressures in the direction of arrows P_{D} and P_{U} do not force negative and positive active material electrode layers of a cell segment towards each other, which could potentially short the battery.

Furthermore, the clamping pressure exerted by the wrapper may be substantially in line with at least a portion of at least one of the gaskets in the stack (e.g., as shown in FIG. 19), for example. This pressure can maintain the sealed relationship between each gasket and the electrode units adjacent thereto in the stack for creating substantially fluid tight barriers about each electrolyte layer. It should be noted that the mating of groove shaped portions formed in the gaskets and their respective adjacent electrode units, as described above in accordance with certain embodiments of the invention, can decrease the amount of clamping pressure required to be exerted in the direction of each of arrows P_{D} and P_{U} in order to create the substantially fluid tight seals. Without such groove shaped portions, the sealing portions between the gasket and adjacent electrode units would be flat and susceptible to slipping (e.g., horizontally or perpendicularly to the direction of the vertical stack) due to internal cell pressure, for example, thereby requiring increased clamping pressure to negate any slipping tendencies.

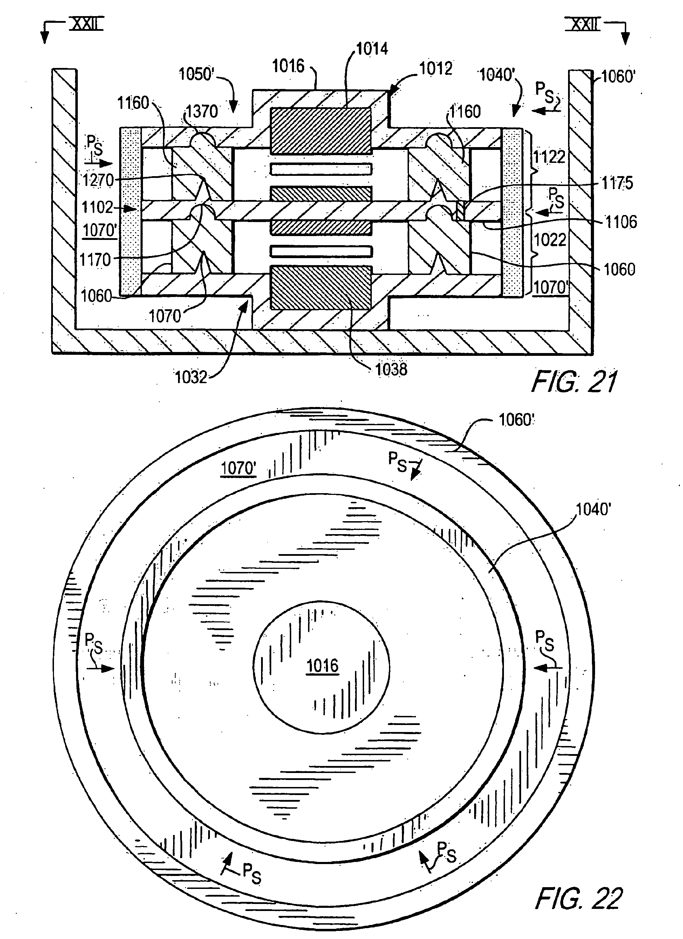

As shown in FIGS. 21 and 22, a wrapper 1040', that may be made of seal wrap, shrink wrap, seal tape, or any other suitable deformable material, can be provided about the stack of cell segments (i.e., cell segments 1022 and 1122). Wrapper 1040' may be provided about the stack such that the terminal electrode layers (i.e., positive electrode layer 1014 and negative electrode layer 1038) may be exposed (e.g., via at least a portion of conductive substrates 1016 and 1036, respectively), and such that a solely outer-edge clamping arrangement may be provided by wrapping the wrapper about the contents of the stack to provide a stacked bi-polar battery 1050'.

The stack of cell segments, as wrapped by wrapper 1040', can be placed inside a container 1060' whose cross-sectional area may be similar in shape but somewhat larger than that of the wrapped stack. Once the wrapped stack is placed inside container 1060', any suitable fluid 1070' that can expand when under pressure, such as air, water, or foam, for example, may be filled into container 1060' about wrapper 1040'. The container may then be sealed and its enclosed fluid 1070' may be pressurized such that it can expand to provide pressure inward about the surface area of wrapper 1040' in the direction of arrows P_{S}, which may be substantially perpendicular to the vertical direction of the stack of cell segments, for tightening wrapper 1040' about the stack of cell segments.

This pressure can maintain the sealed relationship between each gasket and the electrode units adjacent thereto in the stack for creating substantially fluid tight barriers about each electrolyte layer of battery 1050', which may then be subsequently removed from container 1060'. It should be noted that the mating of groove shaped portions formed in the gaskets and their respective adjacent electrode units, as described above decrease the amount of sideways pressure required to be exerted in the direction of arrows P_{S} in order to create the substantially fluid tight seals. The sideways pressure may force at least a portion of a first groove shaped portion against at least a portion of a respective second groove shaped portion in the direction of an arrow P_{S} to further increase tightness of the seal at the grooved contact surface area or groove (e.g., groove 1070, 1170, 1270, or 1370) created between those groove shaped portions.

For example, as a gasket is being pushed laterally or horizontally by sideways pressure in the direction of arrow P_{S} (e.g., either by a wrapper or pressures internal to the cell), the geometry of a groove shaped portion of the gasket may interact with the geometry of a reciprocal groove shaped portion of an electrode unit on top of the gasket to translate at least some of that sideways pressure into vertical pressure, thereby forcing the gasket into the electrode unit and thereby dissipating the sideways pressure over a greater surface area. A wrapper may be provided about the stack to provide a clamping pressure on the top and bottom of the stack (e.g., in the direction of arrows P_{D} and P_{U} of FIGS. 19 and 20) as well as to provide a sideways pressure on the sides of the stack (e.g., in the direction of arrows P_{S} of FIGS. 21 and 22).

Regardless of whether the electrolyte is quite viscous, quite thin, or even frozen within the separator, the amount of electrolyte that may be deposited into a particular cell may be limited by the space defined by the height of the gasket and the dimensions of the electrode unit or units therebetween. For example, as described above with respect to FIGS. 12-16, for example, it may be noted that the amount of electrolyte 1011 that can be deposited within the inner walls of gasket 1060 on top of negative electrode layer 1038 may be limited by space 1080 and, thus, the height of gasket 1060. When some of the electrolyte is absorbed by the active materials of the electrode units of the cell segment (e.g., active material electrode layers 1038 and 1104), there may be less electrolyte present to exist along with the separator in the space between the electrode layers. It may be desirable to increase the amount of electrolyte that may be deposited within a cell segment of the battery during its manufacture such that, once the electrolyte is charged and the battery is formed, each cell segment may be substantially filled with electrolyte.

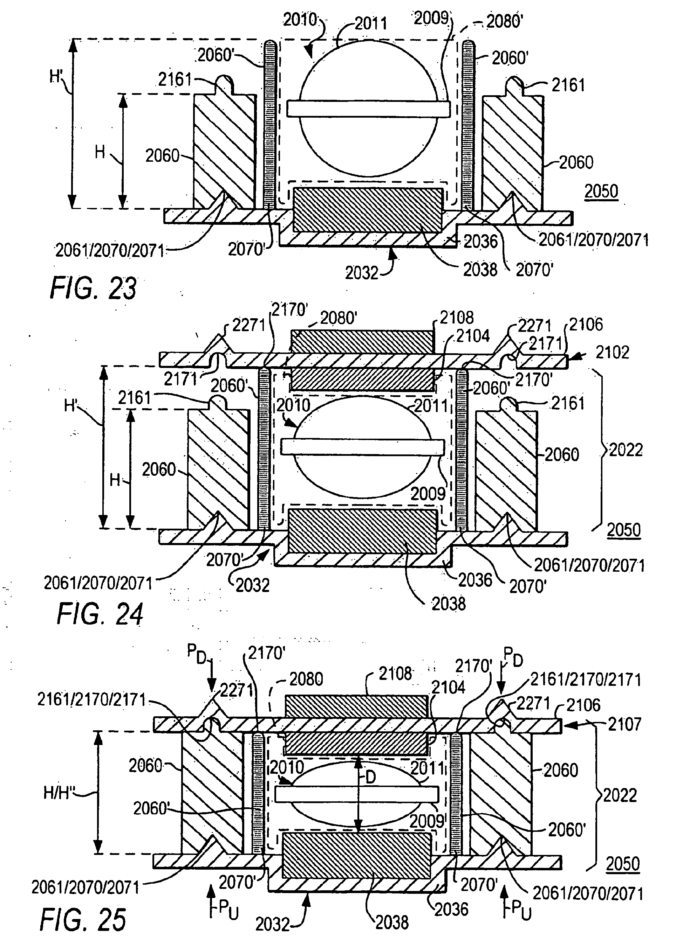

A first embodiment of a method of producing a battery, similar to battery 1050 of FIGS. 10-20, is now described with respect to FIGS. 23-26, for example, such that a greater amount of electrolyte may be deposited within a cell segment during its formation. For example, as shown in FIG. 23, a negative MPU 2032 may initially be provided with an impermeable conductive substrate 2036 and a negative active material electrode layer 2038 coated thereon. Substrate 2036 may be provided with a groove shaped portion 2071 at least partially about negative layer 2038. A substantially incompressible gasket 2060 can be stacked upon substrate 2036 about electrode layer 2038. A groove shaped portion 2061 may be chamfered into the side of gasket 2060 that contacts substrate 2036, such that groove shaped portions 2061 and 2071 may align to create a grooved contact surface area or groove 2070 between the gasket and the substrate. These reciprocal groove shaped portions may aid in the self-alignment of the gasket with respect to the MPU as it is stacked thereupon, thereby simplifying this production step. These reciprocal groove shaped portions in the surfaces of the gasket and MPU may also mate together to restrict certain types of relative movement between the two surfaces.

Additionally, along with substantially incompressible gasket 2060 having a height H, a compressible gasket 2060' having a height H' can also be stacked upon substrate 2036 about electrode layer 2038, either internally to or externally to gasket 2060. Once compressible gasket 2060' has been stacked on top of MPU 2032, a substantially fluid tight cup-shaped receptacle (see, e.g., space 2080') may thus be defined by the inner side walls of compressible gasket 2060' and the portions of MPU 2032 therebetween. Reciprocal groove shaped portions, similar to groove shaped portion 2071 of electrode unit 2032 and groove shaped portion 2061 of gasket 2060, may be chamfered into substrate 2036 and compressible gasket 2060', such that the groove shaped portions may align to create a grooved contact surface area or groove 2070' between the compressible gasket 2060' and substrate 2036. These reciprocal groove shaped portions may aid in the self-alignment of compressible gasket 2060' with respect to MPU 2032 as it is stacked thereupon.

Next, a separator 2009 and an electrolyte 2011 may be deposited within the inner walls of gasket 2060' on top of negative electrode layer 2038 to define an electrolyte layer 2010 within the space 2080'. When the electrolyte to be used is quite viscous, the seal created between the gasket and the MPU may allow for the electrolyte to be easily injected into space 2080 without chance of leaking. It is to be understood that if the electrolyte is not viscous upon insertion into the stack (e.g., in the embodiment where the electrolyte is frozen within the separator), the electrolyte layer may be stacked upon the MPU before the gasket is fitted thereon.

Compressible gasket 2060' may have a height H' in its original uncompressed configuration of FIG. 23, for example. This uncompressed height H' of compressible gasket 2060' can be greater than height H of incompressible gasket 2060 such that space 2080' (see, e.g., FIG. 23) defined by compressible gasket 2060' and MPU 2032 may be larger than space 2080 (see, e.g., FIG. 25) defined by incompressible gasket 2060 and MPU 2032. By providing a larger space 2080' for electrolyte than space 2080, compressible gasket 2060' may allow for an increased amount of electrolyte 2011 to be deposited into the cell segment (e.g., cell segment 2022 of FIG. 24) during the manufacture thereof.

Once separator 2009 and electrolyte 2011 of electrolyte layer 2010 have been deposited within space 2080' defined by compressible gasket 2060' and MPU 2032, a first BPU 2102 may be stacked thereupon (see, e.g., FIG. 24). As shown in FIG. 24, for example, BPU 2102 can include an impermeable conductive substrate 2106 having a positive electrode layer 2104 and a negative electrode layer 2108 coated on opposite sides thereof. With positive electrode layer 2104 of BPU 2102 facing downwards towards negative electrode layer 2038 of MPU 2032, BPU 2102 can be stacked upon compressible gasket 2060'. Reciprocal groove shaped portions may be formed into substrate 2106 and compressible gasket 2060', such that the groove shaped portions may align to create a grooved contact surface area or groove 2170' between the compressible gasket 2060' sand substrate 2106. These reciprocal groove shaped portions may aid in the self-alignment of BPU 2102 with respect to compressible gasket 2060', and therefore MPU 2032, as the BPU is stacked upon the gasket, thereby simplifying this production step.

Once BPU 2102 has been stacked on top of compressible gasket 2060', and thus MPU 2032, a first cell segment 2022 may exist. Moreover, a substantially fluid tight seal may thereby be defined by substrate 2106, substrate 2036, and compressible gasket 2060' about electrolyte layer 2010 (and thus electrolyte 2011). The active materials of electrode layers 2038 and 2104 as well as separator 2009 of cell segment 2022 may be able to soak up or absorb electrolyte 2011 and the cell segment may be charged. As described above, however, in certain embodiments the cell segment may not need to be charged (e.g., wherein a ZnMn portion of the cell segment may act as a natural charger for a NiMH portion of the cell segment).

Once the electrode layers and separator have absorbed any electrolyte and cell segment 2022 has been charged, naturally or otherwise, additional cell segments may be formed to complete the stack of cell segments and a case or wrapper may then be provided to seal the contents of the stack for forming a functional stacked bi-polar battery of the invention, as described above with respect to battery 1050. For example, a wrapper (not shown), similar to wrapper 1040 of FIG. 19, may exert a clamping pressure on the top and bottom of the stack of cell segments including cell segment 2022 in the direction of arrows P_{U} and P_{D} (see, e.g., FIG. 25) to form battery 2050.

The clamping pressure of the wrapper or case in the direction of arrows P_{U} and P_{D} may compress compressible gasket 2060' of cell segment 2022 such that compressible gasket 2060' is reduced to a compressed configuration having a height H'' substantially equal to height H of incompressible gasket 2060. Therefore, the height H of incompressible gasket 2060 may define the height of cell segment 2022 and, thus, the sealed distance D between the active material electrode layers of the cell segment (i.e., layers 2038 and 2104). The sealing of electrolyte 2011 within cell segment 2022 by gaskets 2060 and 2060' and electrode units 2032 and 2102 may therefore be substantially incompressible in the final form of battery 2050.

As shown in FIG. 25, for example, substrate 2106 can also be provided with a groove shaped portion 2171 on one of its sides at least partially about positive electrode layer 2104 and/or electrode layer 2108 of BPU 2102. As the clamping pressure of the wrapper in the direction of arrows P_{U} and P_{D} may compress compressible gasket 2060', BPU 2102 can be forced against substantially incompressible gasket 2060, such that a groove shaped portion 2161 provided on the top of gasket 2060 and groove shaped portion 2171 of substrate 2106 may align and create a grooved contact surface area or groove 2170 between gasket 2060 and substrate 2106. These reciprocal groove shaped portions may aid in the self-alignment of BPU 2102 with respect to gasket 2060, and therefore MPU 2032, as the wrapper compresses and seals the contents of cell segment 2022 of battery 2050, thereby simplifying this production step.

The compression of compressible gasket 2060' from original uncompressed height H' of FIGS. 23 and 24 to the compressed height H'' of FIG. 25 may similarly reduce the space for electrolyte 2011 within cell segment 2022 from the uncompressed size of uncompressed space 2080' of FIGS. 23 and 24 to the compressed size of compressed space 2080 of FIG. 25. Therefore, any portion of uncompressed space 2080' that may be vacated by some of electrolyte 2011 being absorbed by the active materials of electrode units 2032 and 2102 and separator 2009 may be eliminated by the reduction of uncompressed space 2080' to compressed space 2080, such that all of compressed space 2080 may be filled with electrolyte 2011 or separator 2009. Thus, a cell segment of a battery of the invention may be provided with an increased amount of electrolyte during the formation of the cell segment such that, when the battery is fully compressed and sealed, the charged cell segment may be completely filled with electrolyte after formation.

Compressible gasket 2060' may be at least partially made of a material that can dam up or absorb electrolyte 2011. In some embodiments, compressible gasket 2060' may be at least partially made of a material that may protect the active material of one or both of the electrode units of the cell segment. A compressible gasket can be made, for example, of a polymer that may contain materials (e.g., metals and/or oxides) that may leach out of the polymer over time (e.g., by electrical or thermal cycling) and into the electrolyte to provide a micro-coating on either the positive or negative active materials in the cell and/or to slow down the oxidation of the active materials of the cell. The leaching materials may oxidize at a lower reactive state than the active materials to protect the cell from oxidizing and loosing its capacity, for example. This type of compressible gasket with leaching materials may be tailored for extreme conditions, such as over-charging or over-discharging, and may be used to block pathways that would otherwise allow dendrite growth and, thus, cause the battery to short. Compressible gasket 2060' may be formed by a portion of and be integral to substrate 2036 as an extension thereof, such that no fluid passage way therebetween may exist. Such a compressible gasket could be formed by a compressible metal, for example. Furthermore, substrates could be provided with such extensions integral thereto, but which are not compressible. Instead, such substrate extensions could be equal to or shorter than the gasket of the cell segment, such that the extensions of the substrate may create an inherently sealed space for electrolyte to be deposited before the gasket is even provided.

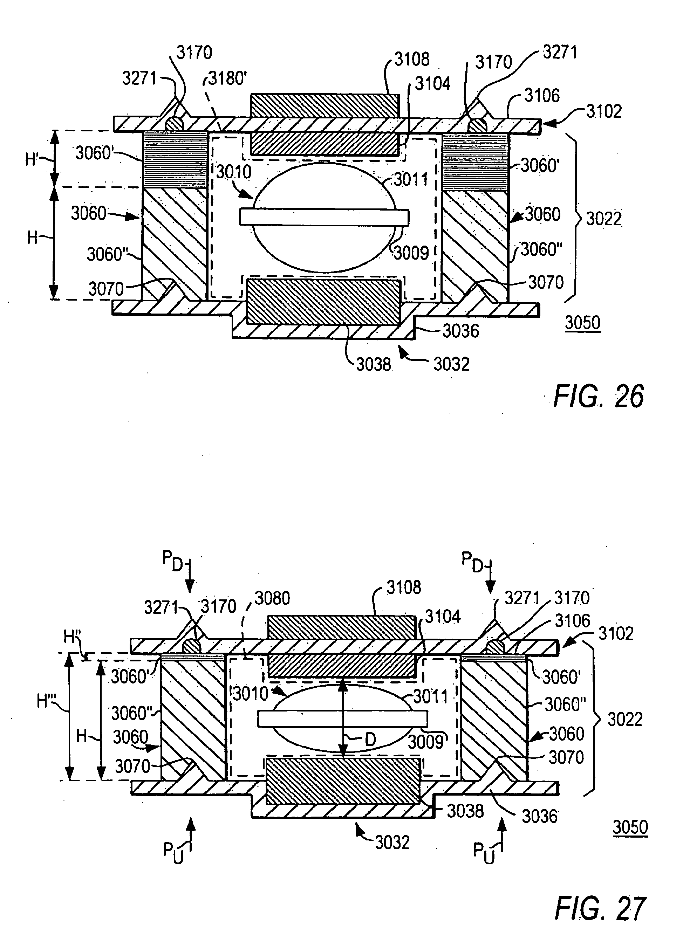

In a second embodiment, as opposed to providing a compressible gasket and an incompressible gasket side by side, as described above with respect to cell segment 2022 of battery 2050, one gasket having at least one compressible portion may be provided for manufacturing a cell segment that may be overfilled with an electrolyte during the formation of the cell. As shown in FIGS. 26 and 27, for example, a gasket 3060 may be provided between BPU 3102 and MPU 3032 for sealing electrolyte 3011 in cell segment 3022. Gasket 3060 may include a compressible gasket portion 3060'' having an original uncompressed height H' and a substantially incompressible gasket portion 3060'' having a height H.

After an electrolyte 3011 is deposited in uncompressed space 3080' of cell segment 3022, a clamping pressure of a wrapper or case (not shown) in the direction of arrows P_{U} and P_{D} may compress compressible gasket portion 3060' of cell segment 3022 such that compressible gasket portion 3060' is reduced to a compressed configuration having a height H'' that is less than height H'. Therefore, the height H of incompressible gasket portion 3060'' along with the compressed height H'' may define the height H''' of cell segment 3022 and, thus, the sealed distance D between the active material electrode layers of the cell segment (i.e., layers 3038 and 32104). The sealing of electrolyte 3011 within cell segment 3022 by gasket portions 3060' and 3060'' of gasket 3060 and electrode units 3032 and 3102 may therefore be substantially incompressible in the final form of battery 3050.

The compression of compressible gasket portion 3060' from original uncompressed height H' of FIG. 26 to the compressed height H'' of FIG. 27 may similarly reduce the space for electrolyte 3011 within cell segment 3022 from the uncompressed size of uncompressed space 3080' of FIG. 26 to the compressed size of compressed space 3080 of FIG. 27. Therefore, any portion of uncompressed space 3080' that may be vacated by some of electrolyte 3011 being absorbed by the active materials of electrode units 3032 and 3102 may be eliminated by the reduction of uncompressed space 3080' to compressed space 3080, such that all of compressed space 3080 may be filled with electrolyte 3011 or separator 3009.

Gasket 3060 may include one or more distinct compressible and incompressible portions, as shown in FIGS. 26 and 27, for example. Alternatively, gasket 3060 may be substantially compressible throughout its entirety from an original uncompressed configuration having an uncompressed height (e.g., height H plus H') to a compressed configuration having a compressed height (e.g., height H'''). The compressed height of substantially compressible gasket 3060 may be determined by the magnitude of force exerted by the wrapper of the battery and/or the composition of gasket 3060. When battery 3050 is fully sealed and compressed by its wrapper, the compressed height of gasket 3060 may define the sealed distance D between the active material electrode layers of the cell segment.

As described above, in order to create a better seal, one or more portions of the surface area of the gasket and the surface area of an adjacent electrode unit that contact each other may each be reciprocally or correspondingly grooved, chamfered, or shaped (e.g., to form a groove (see, e.g., grooves 70 of FIG. 6). These grooves may be formed along or by correspondingly or reciprocally shaped portions of various elements creating a seal in the cell segment, including, but not limited to, reciprocally shaped portions of a solid seal loop and a viscous material, reciprocally shaped portions of a solid seal loop and an electrode layer, reciprocally shaped portions of a first viscous material and a second viscous material, reciprocally shaped portions of a first solid seal loop and a second solid seal loop, and combinations thereof, for example.

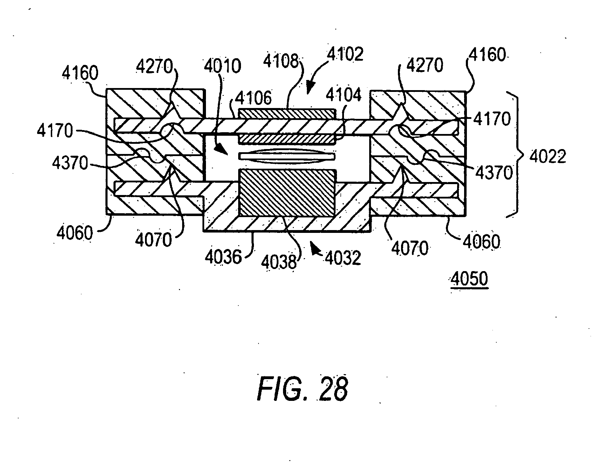

Although each of the above described and illustrated embodiments of a stacked battery show a cell segment including a gasket sealed to each of a first and second electrode unit for sealing an electrolyte therein, it should be noted that each electrode unit of a cell segment may be sealed to its own gasket, and the gaskets of two adjacent electrodes may then be sealed to each other for creating the sealed cell segment. For example, as shown in FIG. 28, for example, a cell segment 4022 of battery 4050 may include an MPU 4032 and a BPU 4102.

A first gasket 4060 may be provided to completely surround the external edge of substrate 4036 of MPU 4032 about its negative active material electrode layer 4038. A groove 4070 may be provided between the top of substrate 4036 about electrode layer 4038 and a portion of gasket 4060 to aid in sealing the contact surfaces of the substrate and the gasket. Similarly, a second gasket 4160 may be provided to completely surround the external edge of substrate 4106 of BPU 4102 about its positive active material electrode layer 4104 and its negative active material electrode layer 4108. A first groove 4170 may be provided between the bottom of substrate 4106 about electrode layer 4104 and a first portion of gasket 4160, while a second groove 4270 may be provided between the top of substrate 4106 about electrode layer 4108 and a second portion of gasket 4160. Each of grooves 4170 and 4270 may aid in sealing the contact surfaces of substrate 4106 and gasket 4160. Moreover, a groove 4370 may be provided between the top of gasket 4060 and the bottom of gasket 4160, about electrode layers 4038 and 4104, to aid in sealing the contact surfaces of gasket 4060 and gasket 4160. It is to be noted that this type of sealing may reduce the number of sealing surfaces within.each cell from two to one, and may rely on the material of the gasket to form a seal at the edge of each substrate of a cell.

A gasket may be injection molded to an electrode unit or another gasket such that they may be fused together to create a seal. In certain embodiments, a gasket may be ultrasonically welded to an electrode unit or another gasket such that they may together form a seal. A gasket may be thermally fused to an electrode unit or another gasket, or through heat flow, whereby a gasket or electrode unit may be heated to melt into an other gasket or electrode unit. Moreover, instead of or in addition to creating groove shaped portions in surfaces of gaskets and/or electrode units to create a seal, a gasket and/or electrode unit may be perforated or have one or more holes running through one or more portions thereof. For example, as shown in FIG. 21, a hole or passageway or perforation 1175 may be provided through a portion of substrate 1106 of BPU 1102 such that a portion of gasket 1060 and/or gasket 1160 may mold to and through substrate 1106. This may allow the material of a gasket to flow through the substrate and grip it better for better handling of high pressures. Alternatively, a hole or passageway or perforation may be provided through a portion of a gasket such that a portion of an electrode unit (e.g., a substrate) may mold to and through the gasket . Holes may be made through both the gasket and electrode unit, such that each of the gasket and electrode unit may mold to and through the other of the gasket and electrode unit, for example.

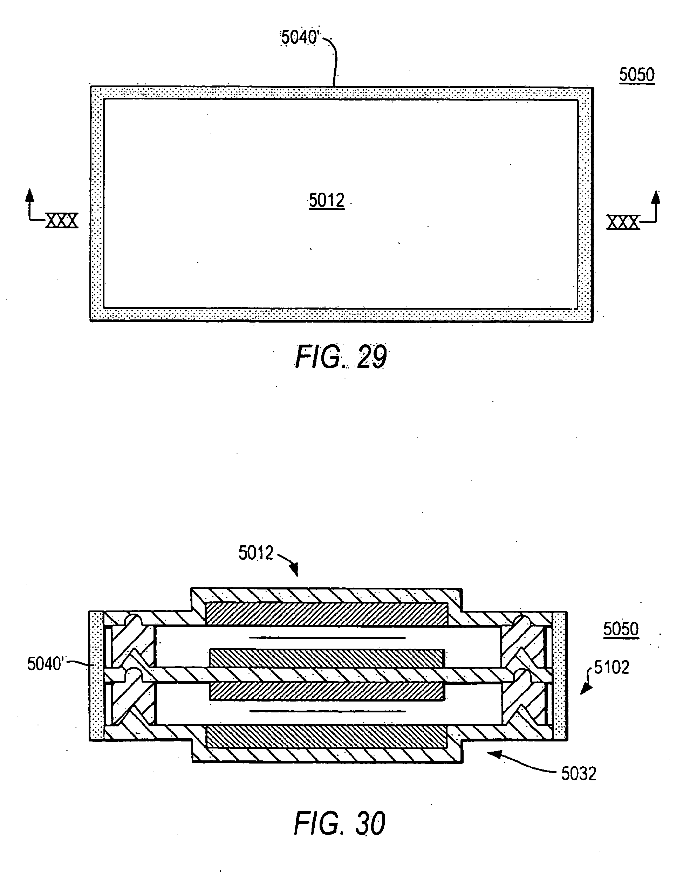

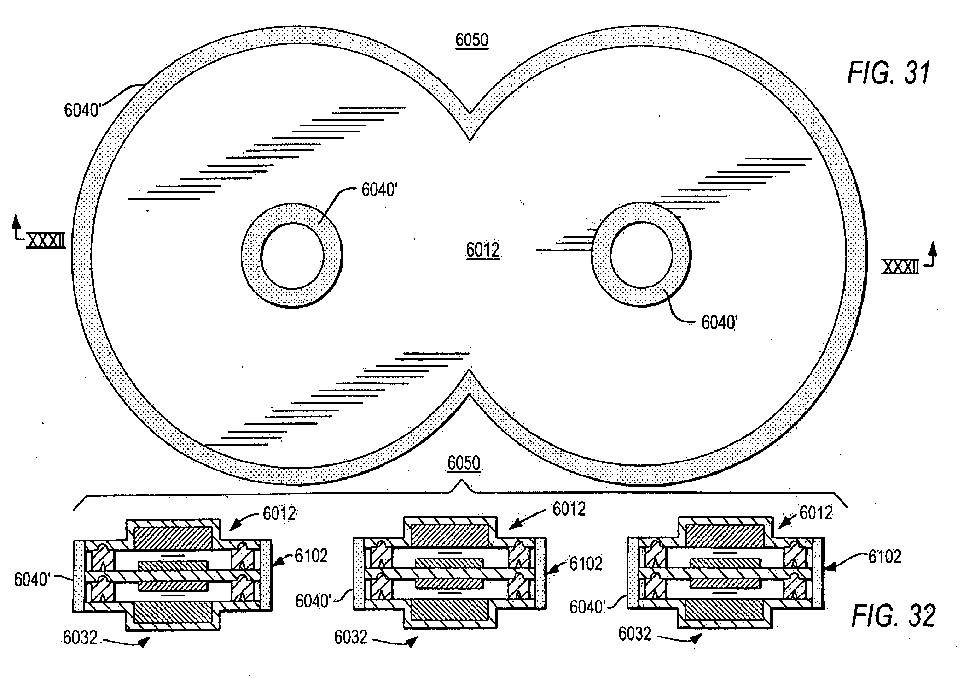

Although each of the above described and illustrated embodiments of the stacked battery show a battery formed by stacking substrates that are round into a cylindrical battery, it should be noted that any of a wide variety of shapes may be utilized to form the substrates of the stacked battery of the invention. For example, the stacked battery of the invention may be formed by stacking electrode units having substrates with cross-sectional areas that are rectangular (see, e.g., rectangular battery 5050, having wrapper 5040', BPU 5102, and MPUs 5012 and 5032, in FIGS. 29 and 30, which may be suitable for being placed behind the display screen of a portable laptop computer, for example), triangular, hexagonal, or any other imaginable shape or combinations thereof. Moreover, such a shape may include shapes with one or more empty spaces within a plane, such as a "figure-8" (see, e.g., battery 6050, having wrapper 6040', BPU 6102, and MPUs 6012 and 6032, in FIGS. 31 and 32. For example, such a "figure-8" design having two distinct circular portions may be suitable for dual-chemistry cells where distinct areas are desired for different active material chemistries, such that there can be some physical separation between the areas to prevent crossover contamination from dendrites but that may be connected across a common substrate. Also, such a "figure-8" battery design having hollow portions therethrough may allow other devices, such as an electronic motor, to be placed within the hollows of the battery structure, for example.

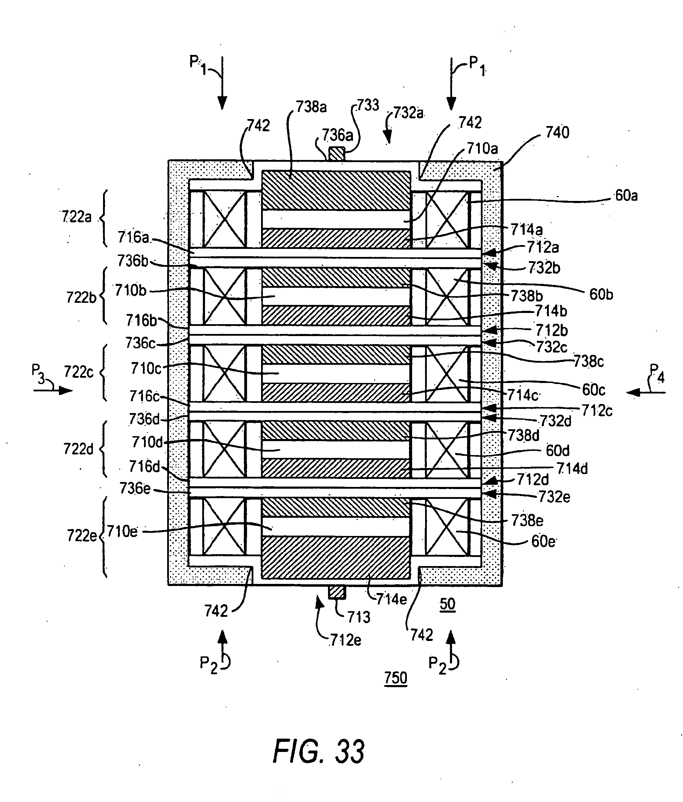

Moreover, although each of the above described and illustrated embodiments of a stacked battery show a stacked bi-polar battery formed by stacking cell segments made of two adjacent BPUs or one BPU and an adjacent MPU, it should be noted that other types of stacked batteries, such as stacked mono-polar batteries, may be formed by any method or may include any apparatus of the present invention. For example, as shown in FIG. 33, a stacked mono-polar battery 750 of the invention may be formed by any method or may include any apparatus of the present invention as described above with respect to FIGS.'1-32.

FIG. 33, for example, shows a plurality of cell segments 722 in a stacked formation. Each cell segment 722 may include a positive mono-polar electrode unit or MPU 712, a negative mono-polar electrode unit or MPU 732, and an electrolyte layer 710 therebetween. A positive electrode layer 714 of the positive MPU 712 of each cell segment 722 may be opposed to a negative electrode layer 738 of the negative MPU 732 of that cell segment via electrolyte layer 710 of that cell segment. In addition to having a positive active material electrode layer 712 formed on a first surface thereof, a substrate 716 of a positive MPU 712 of a first cell segment 722 may also have a second surface that may be electrically coupled to a second surface of a substrate 736 of an adjacent negative MPU 732 of an adjacent cell segment 722.

With continued reference to FIG. 33, for example, negative and positive terminals (e.g., negative MPU 732a and positive MPU 712e) may be included at respective ends the stack of two or more cell segments 722 to constitute a stacked mono-polar battery 750 in accordance with the invention. MPUs 712e and 732a may be provided with corresponding positive and negative electrode leads 713 and 733, respectively.

The number of stacked cell segments 722 can be two or more, and may be appropriately determined in order to correspond to a desired voltage for battery 750. Each cell segment 722 can provide any desired potential, such that a desired voltage for battery 750 may be achieved by effectively adding the potentials provided by each cell segment 722. It will be understood that each cell 722 need not provide identical potentials.

Stacked mono-polar battery 750 can be structured so that the stacks of cell segments 722 may be at least partially encapsulated (e.g., hermetically sealed) into a battery case or wrapper 740 under reduced pressure. MPU conductive substrates 716e and 736a (or at least their respective electrode leads 713 and 733) may be drawn out of battery case 740, so as to mitigate impacts from the exterior upon usage and to prevent environmental degradation, for example. Indentations 742 may be provided in MPUs 712e and 732a for a low-profile casing and a flat surface.

In order to prevent electrolyte of a first cell segment from combining with the electrolyte of another cell segment, gasket or sealing means can be stacked with the electrolyte layers between adjacent electrode units to seal electrolyte within its particular cell segment. For example, as shown in FIG. 33, for example, a stacked mono-polar battery of the invention can include a gasket or seal 760 that may be positioned as a barrier about electrolyte layer 710 and active material electrode layers 714 and 738 of each cell segment 722. The gasket or sealing means may be similar to any of the gasket or sealing means described above with respect to FIGS. 1-32, for example, and can seal electrolyte between the gasket and the adjacent electrode units of that cell. The gasket or sealing means can also provide appropriate spacing between the adjacent electrode units of that cell, for example.

As described above with respect to FIGS. 1-32, for example, in one suitable approach, pressure can be applied to the top and bottom of case 740 in the direction of arrows P1 and P2 for compressing and holding cell segments 722 and gaskets 760 in the sealed configuration shown in FIG. 33, for example. In another suitable approach, pressure can be applied to the sides of case 740 in the direction of arrows P3 and P4 for compressing and holding cell segments 722 and gaskets 760 in the sealed configuration shown in FIG. 33, for example. In yet another suitable approach, pressure can be applied to the top and bottom of case 740 and pressure can also be applied to the sides of case 740 for compressing and holding cell segments 722 and gaskets 760 in the sealed configuration shown in FIG. 33, for example.

While there have been described stacked batteries with improved sealing of electrolyte between adjacent cells, for example, it is to be understood that many changes may be made therein without departing from the scope of the present invention. It will also be understood that various directional and orientational terms such as "horizontal" and "vertical," "top" and "bottom" and "side," "length" and "width" and "height" and "thickness," "inner" and "outer," "internal" and "external," and the like are used herein only for convenience, and that no fixed or absolute directional or orientational limitations are intended by the use of these words. For example, the devices of this invention, as well as their individual components, can have any desired orientation. If reoriented, different directional or orientational terms may need to be used in their description, but that will not alter their fundamental nature as within the scope of this invention. Those skilled in the art will appreciate that the invention can be practiced by other than the described embodiments, which are presented for purposes of illustration rather than of limitation, and the invention is limited only by the claims which follow.

## Claims

1. battery comprising:
a stack of a plurality of electrode units in a stacking direction, the stack comprising:
a first electrode unit;
a second electrode unit stacked on top of the first electrode unit in the stacking direction; and
a first electrolyte layer provided between the first electrode unit and the second electrode unit, the battery further comprising:
a first gasket positioned about the first electrolyte layer, wherein the first electrolyte layer is sealed by the first gasket and the first and second electrode units, wherein the first gasket includes a first gasket member and a second gasket member, and wherein the first gasket member is substantially incompressible and the second gasket member is compressible.

2. The battery of claim 1, wherein the second gasket member is stacked on top of the first gasket member in the stacking direction.

3. The battery of claim 1 wherein the second gasket member is positioned about the first electrolyte layer, and wherein the first gasket member is positioned about the second gasket member.

4. The battery of claim 1 wherein the height of the second gasket member is configured to decrease from a first length to a second length when the electrolyte layer is sealed by the first gasket and the first and second electrode units.

5. The battery of claim 1 wherein a space defined by the first gasket and the first and second electrode units is configured to decrease from a first volume to a second volume when the electrolyte layer is sealed by the first gasket and the first and second electrode units.

6. The battery of claim 5 herein the first electrolyte layer comprises an electrolyte material having a volume equal to the first volume or larger than the second volume.

7. A battery comprising:
a stack of a plurality of electrode units in a stacking direction, the stack comprising:
a first electrode unit;
a second electrode unit stacked on top of the first electrode unit in the stacking direction; and
a first electrolyte layer provided between the first electrode unit and the second electrode unit, the battery further comprising:
a compressible gasket positioned about the first electrolyte layer, and
a substantially incompressible gasket positioned about the compressible gasket

8. The battery of claim 7, wherein the first electrolyte layer is sealed by the compressible gasket and the first and second electrode units.

9. The battery of claim 7, wherein the first electrolyte layer is sealed by the substantially incompressible gasket and the first and second electrode units.

10. The battery any one of claims 1 to 9 wherein the first electrode unit is a mono-polar electrode unit, and wherein the second electrode unit is a mono-polar electrodes unit.

## Patentansprüche

1. Batterie mit:
einem Stapel von mehreren Elektrodeneinheiten in eine Stapelrichtung, wobei der Stapel aufweist:
eine erste Elektrodeneinheit;
eine zweite Elektrodeneinheit, die in die Stapelrichtung auf die erste Elektrodeneinheit gestapelt ist; und
eine erste Elektrolytschicht, die zwischen der ersten Elektrodeneinheit und der zweiten Elektrodeneinheit vorgesehen ist, wobei die Batterie ferner aufweist:
eine erste Dichtung, die um die erste Elektrolytschicht angeordnet ist, wobei die erste Elektrolytschicht durch die erste Dichtung und die erste und zweite Elektrodeneinheit versiegelt ist, wobei die erste Dichtung ein erstes Dichtungselement und ein zweites Dichtungselement aufweist, und wobei das erste Dichtungselement im wesentlichen nicht komprimierbar ist und das zweite Dichtungselement komprimierbar ist.

2. Batterie nach Anspruch 1, wobei das zweite Dichtungselement in die Stapelrichtung auf das erste Dichtungselement gestapelt ist.

3. Batterie nach Anspruch 1, wobei das zweite Dichtungselement um die erste Elektrolytschicht angeordnet ist und wobei das erste Dichtungselement um das zweite Dichtungselement angeordnet ist.

4. Batterie nach Anspruch 1, wobei die Höhe des zweiten Dichtungselements so konfiguriert ist, dass sie von einer ersten Länge auf eine zweite Länge abnimmt, wenn die Elektrolytschicht durch die erste Dichtung und die erste und zweite Elektrodeneinheit versiegelt ist.

5. Batterie nach Anspruch 1, wobei ein durch die erste Dichtung und die erste und zweite Elektrodeneinheit definierter Raum so konfiguriert ist, dass er von einem ersten Volumen auf ein zweites Volumen abnimmt, wenn die Elektrolytschicht durch die erste Dichtung und die erste und zweite Elektrodeneinheit versiegelt ist.

6. Batterie nach Anspruch 5, wobei die erste Elektrolytschicht ein Elektrolytmaterial aufweist, das ein Volumen aufweist, das gleich dem ersten Volumen oder größer als das zweite Volumen ist.

7. Batterie mit:
einem Stapel von mehreren Elektrodeneinheiten in eine Stapelrichtung, wobei der Stapel aufweist:
eine erste Elektrodeneinheit;
eine zweite Elektrodeneinheit, die in die Stapelrichtung auf die erste Elektrodeneinheit gestapelt ist; und
eine erste Elektrolytschicht, die zwischen der ersten Elektrodeneinheit und der zweiten Elektrodeneinheit vorgesehen ist, wobei die Batterie ferner aufweist:
eine komprimierbare Dichtung, die um die erste Elektrolytschicht angeordnet ist, und
eine im Wesentlichen nicht komprimierbare Dichtung, die um die komprimierbare Dichtung angeordnet ist.

8. Batterie nach Anspruch 7, wobei die erste Elektrolytschicht durch die komprimierbare Dichtung und die erste und zweite Elektrodeneinheit versiegelt ist.

9. Batterie nach Anspruch 7, wobei die erste Elektrolytschicht durch die im Wesentlichen nicht komprimierbare Dichtung und die erste und zweite Elektrodeneinheit versiegelt ist.

10. Batterie nach einem der Ansprüche 1 bis 9, wobei die erste Elektrodeneinheit eine monopolare Elektrodeneinheit ist und wobei die zweite Elektrodeneinheit eine monopolare Elektrodeneinheit ist.

## Revendications

1. Batterie, comprenant :
un empilement d'une pluralité d'unités d'électrode dans une direction d'empilement, ledit empilement comportant :
une première unité d'électrode ;
une deuxième unité d'électrode empilée au sommet de la première unité d'électrode dans la direction d'empilement ; et
une première couche d'électrolyte prévue entre la première unité d'électrode et la deuxième unité d'électrode, ladite batterie comprenant en outre :
un premier joint disposé autour de la première couche d'électrolyte, la première couche d'électrolyte étant scellée par le premier joint et par la première et la deuxième unités d'électrode, le premier joint étant pourvu d'un premier élément de joint et d'un deuxième élément de joint, le premier élément de joint étant essentiellement incompressible et le deuxième élément de joint étant compressible.

2. Batterie selon la revendication 1, où le deuxième élément de joint est empilé au sommet du premier élément de joint dans la direction d'empilement.

3. Batterie selon la revendication 1, où le deuxième élément de joint est disposé autour de la première couche d'électrolyte, et où le premier élément de joint est disposé autour du deuxième élément de joint.

4. Batterie selon la revendication 1, où la hauteur du deuxième élément de joint est prévue pour diminuer d'une première longueur à une deuxième longueur quand la couche d'électrolyte est scellée par le premier joint et par la première et la deuxième unités d'électrode.

5. Batterie selon la revendication 1, où un espace défini par le premier joint et par la première et la deuxième unité d'électrode est prévu pour diminuer d'un premier volume à un deuxième volume quand la couche d'électrolyte est scellée par le premier joint et par la première et la deuxième unités d'électrode.

6. Batterie selon la revendication 5, où la première couche d'électrolyte comprend un matériau d'électrolyte ayant un volume égal au premier volume, ou supérieur au deuxième volume.

7. Batterie, comprenant :
un empilement d'une pluralité d'unités d'électrode dans une direction d'empilement, ledit empilement comportant :
une première unité d'électrode ;
une deuxième unité d'électrode empilée au sommet de la première unité d'électrode dans la direction d'empilement ; et
une première couche d'électrolyte prévue entre la première unité d'électrode et la deuxième unité d'électrode, ladite batterie comprenant en outre :
un joint compressible disposé autour de la première couche d'électrolyte, et un joint essentiellement incompressible disposé autour du joint compressible.

8. Batterie selon la revendication 7, où la première couche d'électrolyte est scellée par le joint compressible et par la première et la deuxième unités d'électrode.

9. Batterie selon la revendication 7, où la première couche d'électrolyte est scellée par le joint essentiellement incompressible et par la première et la deuxième unités d'électrode.

10. Batterie selon l'une des revendications 1 à 9, où la première unité d'électrode est une unité d'électrode mono-polaire, et où la deuxième unité d'électrode est une unité d'électrode mono-polaire.
